# EUROPEAN PATENT APPLICATION

(11) **EP 1 367 556 A1**
(43) Date of publication of application: **03.12.2003**
(21) Application number: 03253387.9
(22) Date of filing: 30.05.2003
(51) Int. Cl.: G08B 21/02

(54) **Raising an alert**

(30) Priority: 31.05.2002 GB 0212584; 18.10.2002 GB 0224274; 26.03.2003 GB 0306922
(71) Applicant: Child Safety Network Limited, Woodsetts, Worksop S81 8RD (GB)
(72) Inventor: Mee, David, Woodsetts, Worksop S81 8 RD (GB)
(74) Representative: Atkinson, Ralph

(57) **Abstract**

Apparatus is provided for raising an alert to a situation in which a dependent person has become separated from their caretaker, comprising input means configured to receive a removable data-carrying medium, processing means and output means; wherein said processing means is configured to receive, via said input means, an encoded description of said dependent person, including image data representing said person, and instructions that configure said processing means to perform the steps of reading and decoding said encoded description in order to generate a viewable image, and distributing, via said output means, said viewable image to a plurality of locations.

## Description

### Background of the Invention

### 1. Field of the Invention

The present invention relates to an apparatus and method to raise an alert when a dependent person has become separated from their caretaker.

### 2. Description of the Related Art

Many common situations exist in which dependent persons are placed under the responsibility of a caretaker, for instance young children are under the responsibility of their parents or minders, adults with learning difficulties accompanied by their carers, or older people with dementia in the care of their grown-up children.

Similarly, many situations exist in which such dependent persons may become separated from their respective caretakers, and give rise to an alert because a separated person is unable to rejoin their caretaker. An example of such a situation is a parent and a child visiting a high-density environment, such as a shopping mall, the parent being distracted by an occurrence and the child being similarly distracted away from the parent and walking away. In this situation, if the child goes out of sight of the parent there is a high probability that this will result in the child getting lost.

Systems are known to prevent such situations arising. Such systems, whether they involve low technology such as a harness-and-leash combination or high technology such as failsafe radio wave-based transponders, have had comparatively little success, having regard to the frequency with which undesirable situations as described above happen compared to the uptake of such systems. Thus there remains the problem for caretakers caught out in such situations to raise an alert based upon the most accurate description possible of the lost dependant in the shortest available time. Unfortunately, the accuracy of the required information is often unsatisfactory to achieve a fast recovery, either because said information is provided entirely subjectively, for example in terms of approximate height, weight, facial features and so on, or because it is provided in a format which is not suitable for fast distribution to multiple media-broadcasting systems, for example a printed photograph.

### Summary of the Invention

According to a first aspect of the invention, there is provided apparatus for raising an alert to a situation in which a dependent person has become separated from their caretaker, comprising input means configured to receive a removable data-carrying medium, processing means and output means. The processing means is configured to receive from said removable data-carrying medium, via said input means, an encoded description of said dependent person, including image data representing said person, and instructions that configure said processing means to perform the steps of reading and decoding said encoded description in order to generate a viewable image and distributing, via said output means, said viewable image to a plurality of locations.

According to a second aspect of the invention, there is provided apparatus for encoding data and writing said encoded data onto a removable data-carrying medium to be used as above, said apparatus comprising memory means, image data input means, alphanumeric data input means, processing means and data-writing means. The processing means is configured to perform the steps of receiving data comprising a description of a dependent person from said image data input means and from said alphanumeric data input means, wherein said description comprises image data representing said dependent person and alphanumeric data, referencing said data in a database, encoding said description by means of processing said database with an encoder module and writing, via said data-writing means, said encoded description onto said removable data-carrying medium.

### Brief Description of the Several Views of the Drawings

*Figure 1* shows a caretaker accompanying two dependants in a high-density environment;
*Figure 2* illustrates a networked environment, including processing systems sharing data over said network environment, such as user terminals, cell phones and servers, some of which are located within said high-density environment;
*Figure 3* shows a processing system configured to process and encode a description comprising at least an image of the dependants shown in *Figure 1;*
*Figure 4* details hardware components of a processing system of the type illustrated in *Figures 2* and *3*, including a memory;
*Figure 5* summarises actions performed at a processing system illustrated in *Figures 2* to *4* to input, encode and write a description comprising at least an image of a dependant shown in *Figure 1;*
*Figure 6* illustrates the contents of the memory shown in *Figure 4,* upon inputting data as shown in *Figure 5*, including an encoding module and a database;
*Figure 7* further summarises the step of configuring the processing system of *Figures 2* to *4* to process input data as shown in *Figure 5*;
*Figure 8* illustrates the contents of the temporary data structure shown in *Figure 5*, within which the user-inputted data shown in *Figure 7* is to be stored, and including a default extended mark-up language (XML) script;
*Figure 9* shows an example of the default XML script shown in *Figure 8* to be updated by means of the database shown in *Figure 7* according to the encoding step shown in *Figure 5*;
*Figure 10* further summarises the steps of inputting and processing data as shown in *Figures 5* and *6* to update the database shown in *Figure 7;*
*Figure 11* is a diagrammatic representation of the data processing flow, as summarised in *Figures 5* to *10;*
*Figure 12* illustrates the contents of the temporary data structure shown in *Figures 5*, *8* and *11* upon completing the process shown in Figure *11*;
*Figure 13* is a diagrammatic representation of the encoded data writing flow, as summarised in *Figure 5*, including a removable data-carrying medium;
*Figure 14* shows alternative embodiments of the data-carrying medium shown in *Figure 13* and onto which the final encoded data shown in *Figures 12* and *13* may be written;
*Figure 15* shows the caretaker shown in *Figure 1* having lost one dependant in the high-density environment of *Figures 1* and *2*;
*Figure 16* shows the caretaker shown in *Figure 15* providing a security officer, who has a processing system, with the removable data-carrying medium shown in *Figure 13;*
*Figure 17* details hardware components of the processing system shown in *Figure 16,* including a memory;
*Figure 18* summarises actions performed at the processing system of *Figure 17* to read, decode and display and/or broadcast data representing at least an image of the lost dependant first shown in *Figure 1;*
*Figure 19* further summarises the step of configuring the processing system of *Figure 17* to broadcast data as shown in *Figure 18*, including a step of constructing hypertext mark-up language (HTML) pages;
*Figure 20* illustrates the contents of the memory shown in *Figure 17* upon decoding data as shown in *Figures 18* and *19*, including a decoded description;
*Figure 21* shows the decoded description shown in *Figure 20* selectively broadcast within the networked environment shown in *Figure 2* to raise an alert about the lost dependent first shown in *Figure 1.*

### Best Mode for Carrying Out the Invention

An embodiment of the invention will now be described by way of example only with reference to the previously identified drawings.

### Figure 1

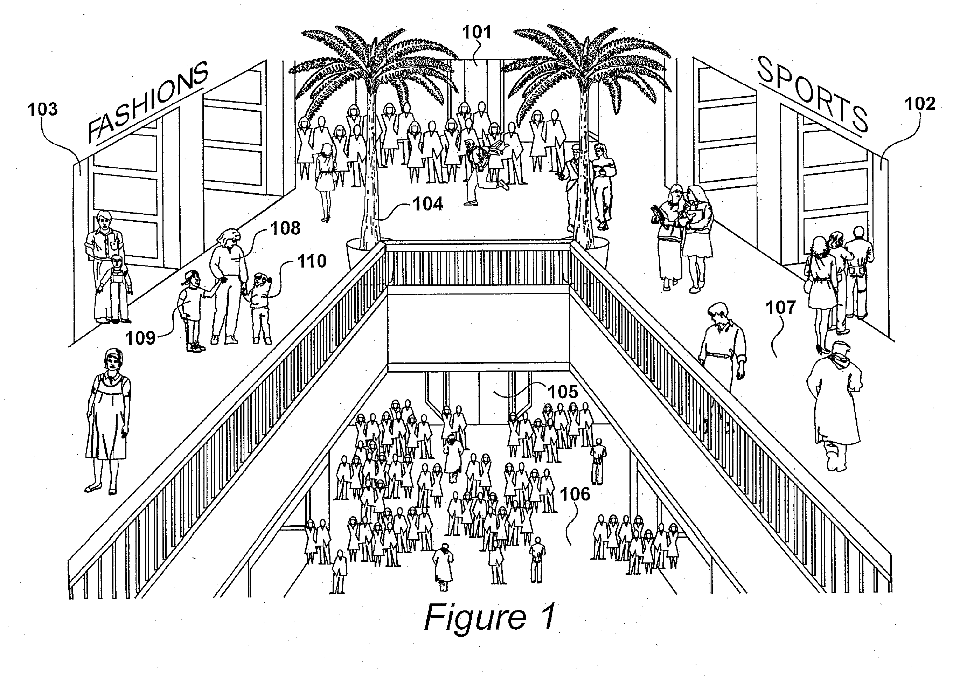

*Figure 1* shows a responsible person, or caretaker, visiting a high-density environment with two accompanying dependent persons.

In the example, an internal representation of said high-density environment is shown as a conventional shopping mall **101**, having multiple retail outlets **102**, **103** and/or points of particular interest **104**, **105** located along alleyways, possibly spread over multiple floor levels **106**, **107**. In the example said caretaker is a parent **108** accompanying her two children **109**, **110**.

In the event of either or both children **109**, **110** becoming separated from parent **108** during the visit, say child **109**, conventional wisdom would have parent **108** first attempting to locate said separated child **109** and, if unsuccessful after a period of time, then contacting the local security officers for assistance.

Parent **108** would then have to provide the name and describe the weight, height and physical attributes of child **109**, and the accuracy of such information would be fairly essential for achieving a fast recovery of child **109**, especially if a photograph were not carried at the time, for instance as a keepsake. Even if a photograph were carried and supplied to assist the description at the time, it would be printed material that would take time and specialist equipment such as a scanner to digitise locally then broadcast to local, internal display systems. In situations such as herein described, time is of the essence and so delays in putting out information regarding the dependent person should be minimised. A further shortcoming of a conventional photograph is its ephemeral nature, since the lost child **109** pictured thereon may have outgrown his or her likelihood in the picture, for instance if the photograph carried as a keepsake is of child **109** as a toddler, thus making the photograph useless to assist the description at the time.

Thus, in the event of child **109** becoming lost during the mall visit, it is most likely that an accurate description including a readily-distributable image of the child would not be obtained before an extended period of time had elapsed, during which time efforts to locate said child **109** would be based solely upon two types of information, some of which being accurate but ineffective for the task, such as the name of child **109**. The rest of the information would be based on the parent's subjective view of the child, such as the weight, height and physical attributes of child **109**.

Thus there is herein described an apparatus for raising an alert to the above situation in which child **109** has become separated from parent **108**, which comprises encoding and writing the information required to provide an accurate description, including at least an image of child **109**, onto a removable data-carrying medium, then reading and decoding said information to generate at least one viewable image and distributing said image to a plurality of locations around said facility **101**.

Parent **108** should initially encode and write said information, including at least an image of child **109**, onto said removable data-carrying medium, and this initial data-entry activity may be carried out at varying locations, which are preferably but not necessarily network-connected. Similarly, the locations to which said information may have to be distributed if child **109** is lost may vary to a large extent, either in terms of physical locations or in terms of addressable locations. What is meant by addressable locations is locations connected by a network, and said information distribution preferably takes place across said networked environment.

### Figure 2

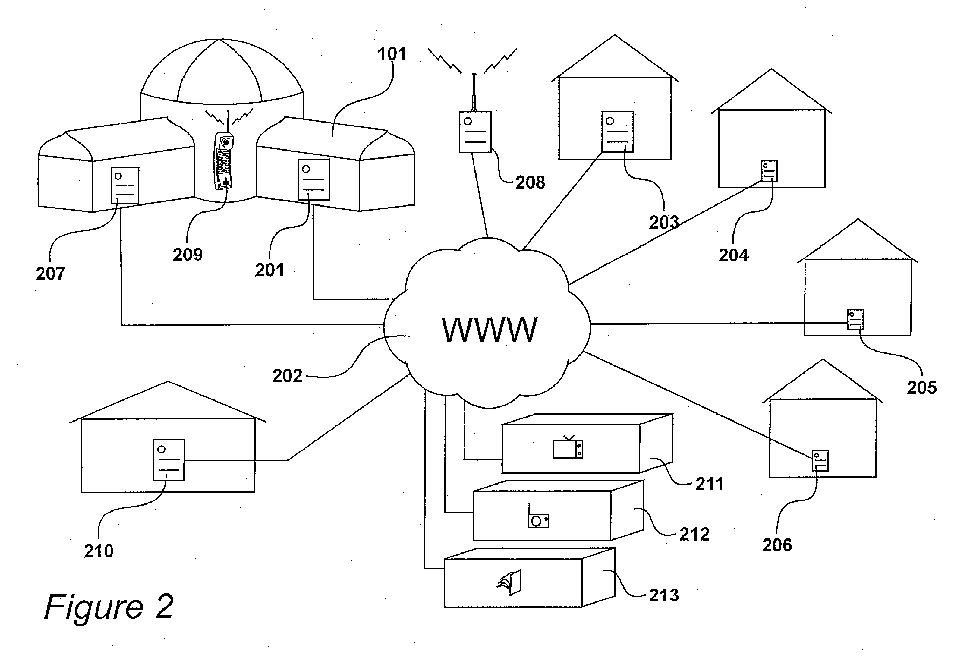

*Figure 2* illustrates an example of said networked environment, including said physical and addressable locations, some of which are located within mall **101**.

A first networked location **201** is shown physically located within mall **101** and connected to the Internet **202**. In the current embodiment of the present invention, location **201** is a self-contained, one-time-purchase booth configured with a processing system and input means with which parent **108** may encode and write the required information onto a removable data-carrying medium, wherein said processing means and input means will be described below in further detail. In an alternative embodiment, location **201** is a self-contained booth configured as above, but wherein parent **108** may encode and write an updated set of said required information onto said removable data-carrying medium, for instance when child **109** has grown up to the extent that current descriptive information is redundant.

The operation of any of said booths may be coin-based, credit- or debit card transaction-based or even linked to retail loyalty card schemes wherein credits for system as herein described are acquired as a reward. It will be readily apparent that any type of transaction may be used.

A plurality of further networked locations are shown, which are all connected to the Internet **202** and, potentially, may send and receive data such as the information described with reference to *Figure 1.* As is the case with booth **201**, it is processing systems physically located within said networked locations that are connected to the Internet **202**. Such processing systems may thus include a network server **203** which may send and receive data to the processing system of said booth **201** across the Internet **202**.

Similarly, private processing systems **204**, **205** and **206** respectively represent privately-owned domestic personal computers, at which caretakers may encode and write information describing their dependent persons in a manner similar to parent **108** at booth **201**. It will be appreciated that the invention is not limited to the current description and that any system that can encode and write a dependant's description, including at least an image, onto a removable data-carrying medium may be used in place of booth **201** or personal computers **204** to **206**.

Further addressable locations include for instance another network server **207** processing data for the security force of mall **101** and, in a current embodiment of the present invention, sending data input therein to an SMS, GPRS or G3 networked server **208**, the function of which is to wirelessly broadcast said data to respectively WAP, GPRS or G3-compatible mobile telephone handsets **209**, with which security officers within mall **101** are preferably equipped. Such handsets **209** are capable of processing, wirelessly distributing and locally displaying image data. Other addressable locations to which said information and image may be sent may also include processing systems operated by official emergency services, such as processing system **210** operated by the police and, further, processing systems **211**, **212** and **213** respectively located at a television broadcasting facility, a radio broadcasting facility and a newspaper office, for the purpose of broadening the alerts if so required.

Thus, each of the physical locations described within the networked environment shown in *Figure 2* includes at least one processing system, which is preferably but not necessarily connected to the Internet **202**. Indeed, although the network connectivity to the Internet **202** is not necessary to achieve the encoding and writing of the required information and image data onto the removable data-carrying medium, it is desirable for the subsequent distribution of said information and image describing child **109** when required.

### Figure 3

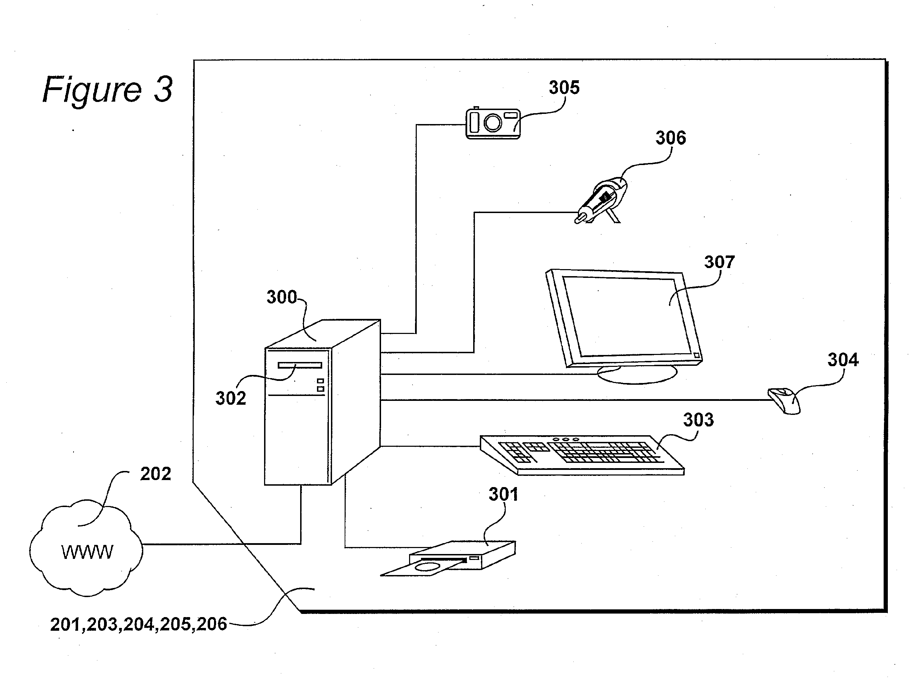

*Figure 3* shows a processing system such as systems **201** and **203** to **206** with which to process input data representing at least an image of children **109**, **110** to be subsequently encoded and written to the removable data-carrying medium.

A generic programmable computer **300**, such as a personal computer, is shown in *Figure 3,* the hardware components of which will be described below in further detail. Said system **201** is connected to a plurality of devices with which to input said information data, including said image data, and with which to write said data when encoded, by means of writing said encoded data onto a removable data-carrying medium.

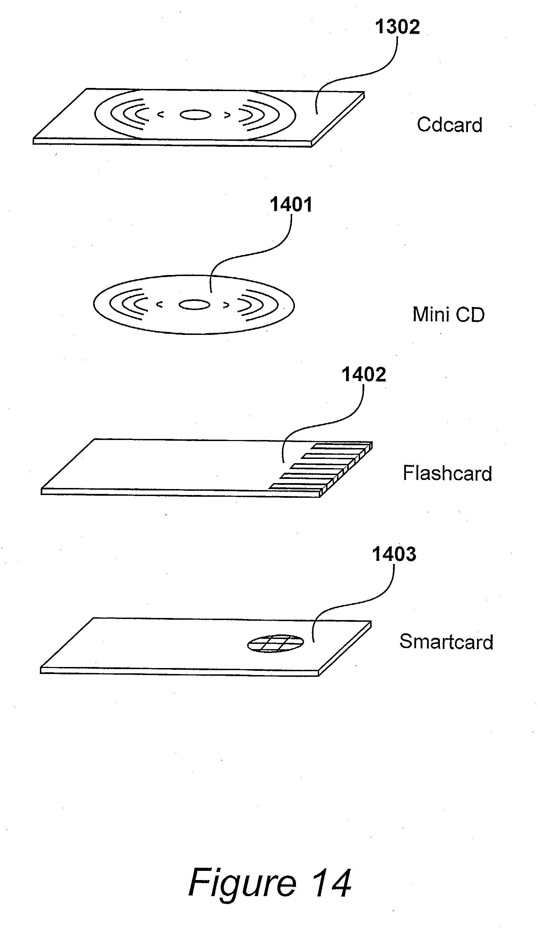

Firstly, in order to write said encoded data, a data-writing means is required, the type of which will vary according to which type of removable data-carrying medium is used. In this embodiment said removable data-carrying medium is a credit card-shaped and credit card-sized re-writable CD, and so the data-writing means is a combination DVD-reader and CD-rewriter **301**, but it will be readily understood by those skilled in the art that the invention is not limited to optical removable media and may be similarly implemented using any other type of removable data-carrying medium, various types of which will be further described below with reference to *Figure 14.* The data-writing means will therefore vary accordingly as being a suitable means to write upon the medium used.

In order to write the data onto a removable data-carrying medium the programmable computer **300** is configured with a plurality of data input means specific to the type of data to be input, thus comprising alphanumeric data input means which in this example is keyboard **303**, and, optionally, a directional input device to specify where to input said alphanumeric data such as a mouse **304**. The programmable computer **300** is further configured with image data input means, which in this example is a digital camera **305**. It will be readily apparent that other image data input means, such as a scanner, could be used. In this embodiment the programmable computer **300** is also configured with analogue input means, which in this example is a microphone **306**, although this is not provided in other embodiments of the invention.

Preferably the programmable computer **300** is also equipped with a video display unit **307**, by means of which the user of said system **201**, such as parent **108**, may visualise the data that has been input by means of input means **303** to **306**, and assess the accuracy thereof, and a ZIP™ drive **302**.

### Figure 4

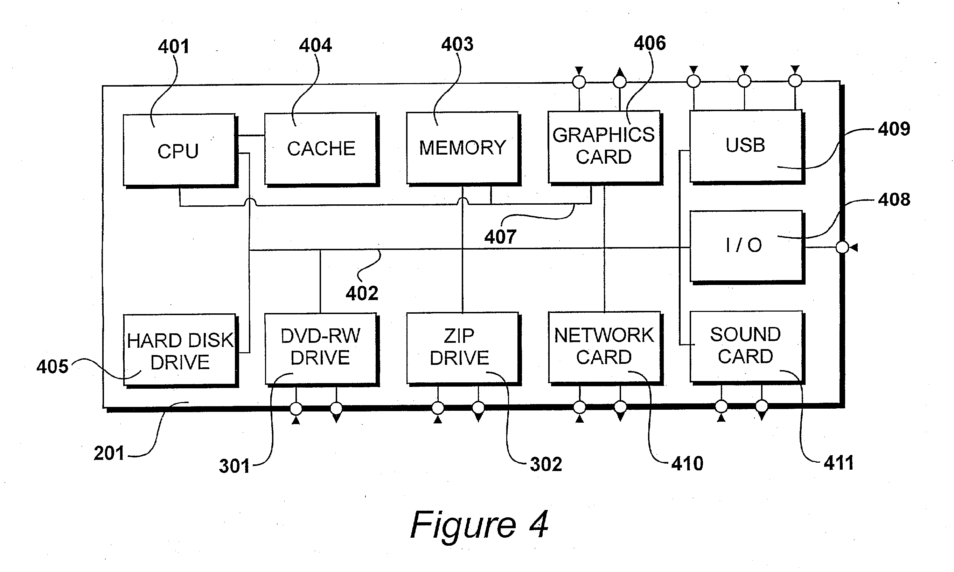

The components of computer system **201** are further detailed in *Figure 4.* The system includes a Pentium 4™ central processing unit (CPU) **401** which fetches and executes instructions and manipulates data via a system bus **402** providing connectivity with a larger main memory **403**, DVD-ROM™ re-writer **301**, ZIP™ drive **302** and other components which will be further detailed below. System bus **402** is, for instance, a crossbar switch or other such bus connectivity logic. CPU **401** is configured with a high-speed cache **404** comprising between two hundred and fifty-six and five hundred and twelve kilobytes, which stores frequently accessed instructions and data to reduce fetching operations from larger memory **403**. Memory **403** comprises between two hundred and fifty-six megabytes and one gigabyte of dynamic randomly accessible memory and stores executable programs which, along with data, are received via said bus **402** from a hard disk drive **405**. Hard disc drive (HDD) **405** provides non-volatile bulk storage of instructions and data.

A graphics card **406** receives graphics data from the CPU **401**, along with graphics instructions. Said graphics accelerator **406** is preferably coupled to the CPU **401** by means of a direct port **407**, such as the advanced graphics port (AGP) promulgated by the Intel Corporation, the bandwidth of which exceeds the bandwidth of bus **402**. Preferably, the graphics card **406** includes substantial dedicated graphical processing capabilities, so that the CPU **401** is not burdened with computationally intensive tasks for which it is not optimised.

Input/output interface **408** provides standard connectivity to peripherals such as keyboard **303** and mouse **304**. A Universal Serial Bus (USB) **409** is provided as an alternative means of providing connectivity to peripherals such as keyboard **303**, mouse **304** and digital camera **305**, whereby said connectivity is improved with a faster bandwidth for user input data transfer. A Firewire™ interface may also be provided as an alternative means of providing connectivity to camera **305**, whereby said connectivity is improved with a bandwidth for image data transfer yet faster than said USB **409**.

Network card **410** provides connectivity to the internet **202** by processing a plurality of communication protocols. A sound card **411** is provided which receives sound data from the CPU **401** over system bus **402** along with sound processing instructions, or analogue sound data from the microphone **306** to be digitised therein, in a manner similar to graphics card **406**. Preferably, the sound card **411** includes substantial dedicated digital sound processing capabilities, so that the CPU **401** is not burdened with computationally intensive tasks for which it is not optimised.

The equipment shown in *Figure 4* constitutes an inexpensive programmable computer of fairly standard type, such as a programmable computer known to those skilled in the art as an IBM™ PC compatible or an Apple™ Mac. However any computer having the necessary components could be used.

### Figure 5

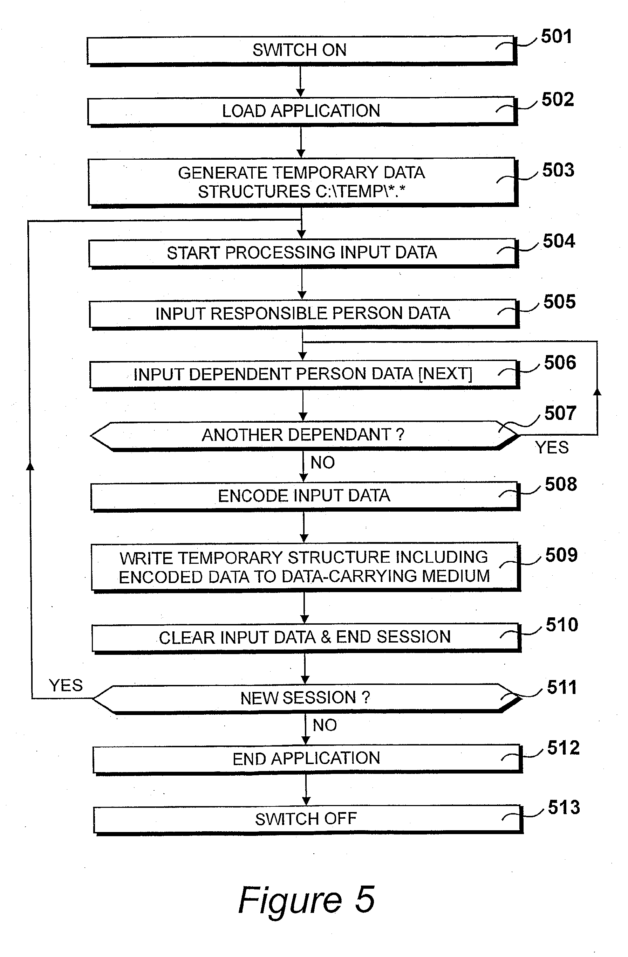

The operational steps according to which a responsible person may interact with a processing system, such as programmable computer **300**, in order to encode data describing a dependent person are detailed in *Figure 5.*

At step **501**, the programmable computer **300** is switched on, whereby all instructions and data sets necessary to process image data are loaded at step **502**, including instructions to encode data describing a dependent person. Alternatively, said instructions and data sets are loaded from a data-carrying medium (normally not the same as removable data-carrying medium **302**) inserted and read by DVD-ROM™ **301** or ZIP™ drive **302**, or loaded from network server **203** over the Internet **202** at step **502**, for instance if said instructions are not yet stored on hard disk drive **405**. Upon completing the loading operation of step **502**, the processing of said instructions by CPU **401** starts at step **503**, whereby a temporary data-storing structure is first generated in said HDD **405**, such that CPU **401** may then process input data according to said instructions from step **504** onwards and store said processed input data in said temporary data structure for encoding upon eventually completing said data entry.

Data describing any dependant should preferably be input by the person responsible for said dependant and thus data describing said responsible person is preferably first input at step **505**. This ensures the integrity and the accuracy of the dependent person's data when it is either input or retrieved. In an alternative embodiment of the present invention, however, the removable data-carrying medium contains data describing only said dependent person and not the responsible person, whereby each dependent person of a group such as a family requires a respective removable data-carrying medium.

Upon completing said step **505**, the data required to describe and/or represent the first dependant, for example child **109**, is input at the next step **506**, including at least an image of child **109**. At step **507** a question is asked as to whether data required to describe and/or represent another dependant should be input, for example data required to describe and/or represent the second child **110**.

If the question asked at step **507** is answered in the affirmative, control is returned to step **506** such that said data can be input. Alternatively, if the question asked at step **507** is answered in the negative then the data entry steps are complete and the data input according to steps **505** to **507** and processed according to the rules started at step **504** may now be encoded at step **508** and subsequently written to a data-carrying medium at step **509**.

Upon completing the writing step **509**, the temporary data structure generated at step **503** is re-initialised at step **510**, whereby all of the data input and processed between steps **504** and **509** is irretrievably deleted from said structure. At step **511** a question is asked as to whether a new session should be started, whereby if this question is answered in the affirmative control should be returned to step **504** such that a fresh set of input data describing the same or a different responsible person and the same or different dependent persons may be processed, encoded and written.

In an alternative embodiment of the present invention wherein the data on the removable data-carrying medium may be updated, then if the question asked at step **511** is answered in the affirmative said responsible person may update said data required to describe and/or represent any of said dependants, for instance the image of child **108** input at step **506**, by means of DVD-rewriter device **301** rewriting said updated image onto said re-writable, removable data-carrying medium.

In the present embodiment, wherein the apparatus described in *Figure 3* is configured as said self-contained, one-time-purchase coin-operated booth shown in *Figure 2,* an initial financial transaction, such as the depositing of a requisite sum in a coin-slot, may for instance provide a positive answer to question **511**.

Alternatively, the question asked at step **511** is answered in the negative, whereby the operator of programmable computer **300** is at liberty to stop the processing of the instructions at step **512** and, eventually, switch programmable computer **300** off at step **513**.

### Figure 6

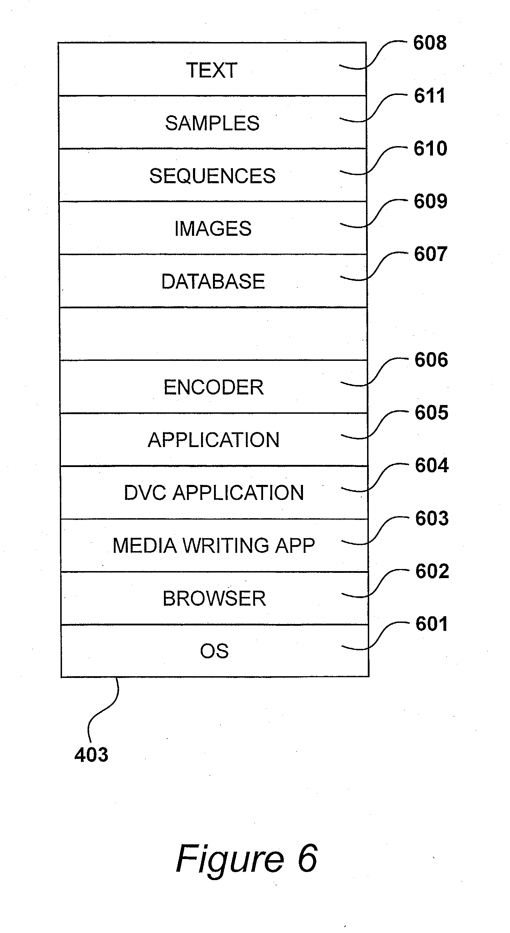

The contents of main memory **403** subsequent to the starting of the input data processing step **504** shown in *Figure 5* are further detailed in *Figure 6.*

An operating system is shown at **601** which comprises a reduced set of instructions for CPU **401**, the purpose of which is to provide programmable computer **300** with basic functionality. Examples of basic functions include, for instance, access to files stored on hard disk drive **405** or accessed from DVD/CD ROM drive **301** or ZIP drive **302** and management thereof, network connectivity with network server **203**, the Internet **202** and camera **305**, interpretation and processing of the input from keyboard **303** and mouse **304**. In the example, the operating system is Windows XP™ provided by the Microsoft corporation of Redmond, California, but it will be apparent to those skilled in the art that the instructions herein described may be easily adapted to function under different other known operating systems, such as other versions of the Windows operating system, MAC OS-X™ provided by Apple Corporation, IRIX™ provided by Silicon Graphics Inc, or LINUX, which is freely distributed.

An internet browser application is shown at **602** which processes data packets coded by both hypertext mark-up language (HTML) and extended mark-up language (XML), or other internet-specific formatted data, into graphical data for display on VDU **307**. A digital video capture application is shown at **603** which processes digital video image data generated by camera **305** and accessed at USB interface **409** into graphical data for display on VDU **307** and processing by the instructions herein described. A medium writing application is shown at **604** which processes final encoded input data into specific medium-formatted binary data and manages transfer of said data between the hard disk drive **405** and/or the memory **403**, and the removable data-carrying medium when inserted in the CD-writing device **301**.

The instructions are shown as application **605**, which configures the CPU **401** to process input data according to steps **504** to **511**. Corresponding application data is shown which comprises various sets of user-independent data and user-dependent data, to be subsequently encoded and written to a removable data-carrying medium at steps **508** and **509** respectively. Said encoding step **508** requires an encoding module **606**, the function of which is to translate a database storing field-indexed strings of alphanumeric values, such as ASCII characters input by means of keyboard **303**, into a processable XML or Java script.

Said database is shown at **607** and constitutes said user-independent data. Said database is described as user-independent insofar as it is a non-modifiable database template, which may only receive and index input data as said strings of alphanumeric values, such as said ASCII characters input by means of keyboard **303**.

Conversely, said user-dependent data comprises said strings of alphanumeric values, shown as text input data at **608**. It also comprises non-alphanumeric data, preferably such as image data **609** obtained via digital camera **305** and digitised by application **603**, whereby said digitising is preferably carried out at varying high and low resolutions and stored as JPEG-formatted files. Image data **609** comprises photographs of parent **108**, child **109** and child **110**, and can thus be considered as representing each of these. In this embodiment said user-dependent data also comprises sequences of such photographs constituting videoclips **610**, also obtained via digital camera **305** and digitised by application **603** and preferably stored as MPEG1-formatted file, and sound samples as voice files **611** obtained via microphone **306** and digitised by soundcard **411** and preferably stored as WAV-formatted or MP3-formatted files. However in other embodiments of the invention the non-alphanumeric data may comprise only image data **609**, and/or may only represent a single dependent child.

### Figure 7

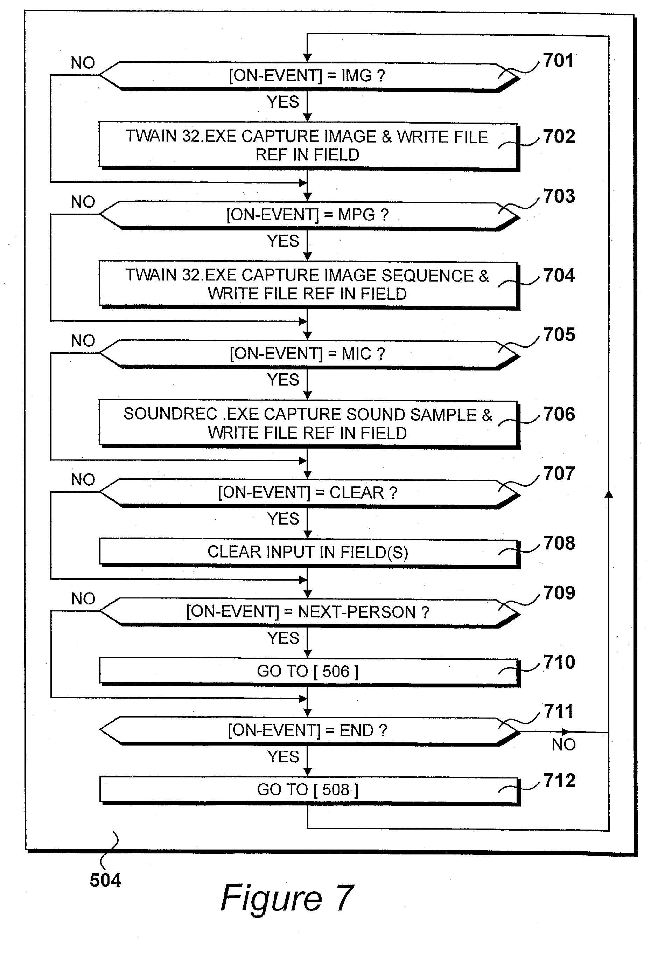

The step **504** of configuring the programmable computer **300** to process input data is further described in *Figure 7.* In effect, said step **504** comprises enunciating a set of conditional rules and corresponding processing decisions for CPU **401** to follow in order to accurately process input data according to which type of data is input. Said conditional rules and processing decisions are shown as steps which are interactively processed by CPU **401** in a never-ending loop called a thread. Said thread is processed concurrently with any other applications processed by said CPU **401** until all of the required information data, including at least one image, has been processed.

A first question is asked at step **601** as to whether an event triggered by the user of programmable computer **300** interacting with key board **303** or mouse **304**, for instance parent **108** pressing a key or clicking a mouse button, specifies that the application loaded at step **502** should now process image data **609**. If the question asked at step **701** is answered in the affirmative, the instructions **605** configure CPU **401** to process the capture application **604** shown as "twain 32", thus capture image data by means of digital camera **305**, whereby said image data is stored in memory **403** as an image file and application **605** generates a reference in database **607** uniquely identifying said file.

Alternatively, if the question asked at step **701** is answered in the negative control is forwarded to the next question **703**, asking this time whether the event triggered by the user identifies input data as a video clip. If the question asked at step **703** is answered in the affirmative, application **605** performs in the same calls and functions as described in relation **702**, but additionally configures the capture application **604** to capture image data as a sequence of successive image frames, as opposed to the single image frame captured at said step **702**. Thus, said input sequence **610** is similarly stored in memory **403** as a file, which is uniquely referenced within database **607** by application **605**.

Alternatively, the question asked at step **703** is answered in the negative, whereby control is forwarded to the next question **705**, asking whether the triggered event identifies input data as a sound sample. If the question asked at step **705** is answered in the affirmative, application **605** configures CPU **401** to call for soundcard **411** to digitise the analogue sound sample input by means of microphone **306**, shown as "sound rec". As was previously the case for image data **609**, **610**, said digitised sample **611** is stored in memory **403** as a sound file and, again, uniquely referenced within database **607** by application **605**.

Alternatively, if the question asked at step **705** is answered in the negative and control is forwarded to the next question **707**, asking whether the triggered event identifies a condition requiring application **605** to erase any data so far input. If question **707** is answered in the affirmative, application **605** initialises database **607**, whereby all of the data **608** to **611** so far input is deleted from memory **403** and the user of programmable computer **300** may start inputting information data afresh.

Alternatively, the question asked at step **707** is answered in the negative, whereby control is directed to the penultimate question **709**, asking whether the triggered event identifies a condition for application **605** to end processing information data relating to a first person and start processing input data relating to a next person. Thus if the question of **709** is answered in the affirmative, application **605** configures CPU **401** to carry out the processing step **506**. Alternatively, the question asked at step **709** is answered in the negative, whereby the control is forwarded to the last question **711**, asking whether the triggered event signals to application **605** that all of the required information data has been input.

If the question asked at step **711** is answered in the affirmative, then at step **712** application **605** configures CPU **401** to start encoding input data **607** to **611** according to processing step **508**. Alternatively, if the question asked at step **711** is answered in the negative, control is returned to the first question **701** and so on and so forth until such time as question **711** is answered in the affirmative.

In an alternative embodiment of the present invention, the sound digitising and storing step **706** is jointly processed with the frame sequence capturing step **704** when answering question **703** in the affirmative, the respective image data and sound data of which are multiplexed by encoder **606** at step **508** in order to generate a video clip with sound, for instance conforming to the MPEG1 or AVI file formats.

### Figure 8

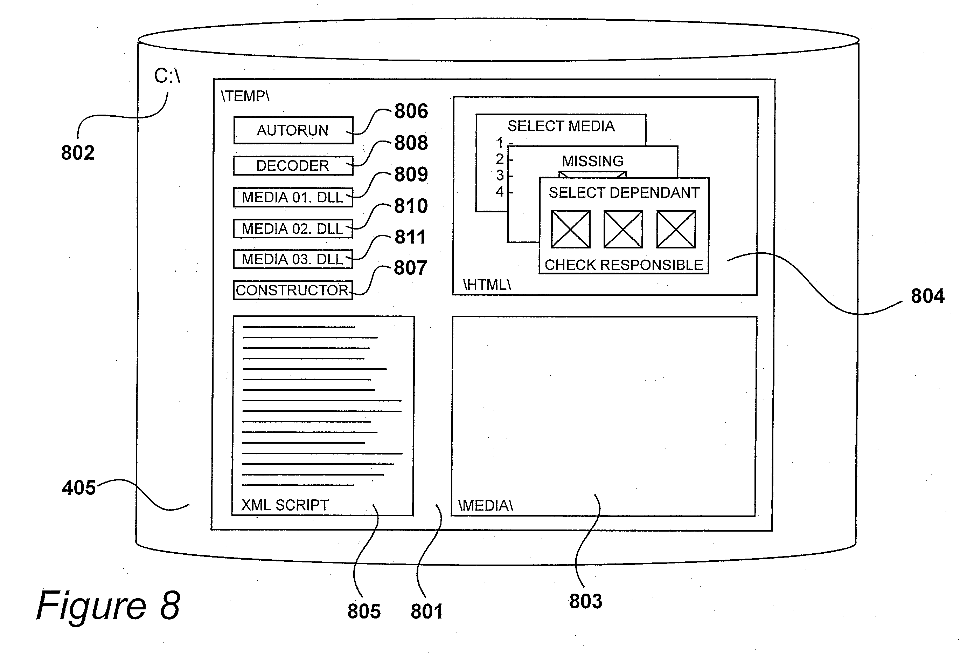

The input data **608** to **611** shown in *Figure 6* are processed according to the input data processing rules of step **504** further described in *Figure 7* and temporarily stored in volatile memory **403** until application **605** is instructed to encode said input data at step **508**, whereby said input data is moved from memory **403** to the temporary data structure generated in hard disk drive **405** at step **503**. Said temporary data structure is illustrated in *Figure 8*, within which the user-input data shown in *Figures 5* to *7* are to be stored.

In the current embodiment, the temporary data structure is generated as a file folder "temp" **801** depending directly from the root drive designation **802**. It will be readily apparent, however, to those skilled in the art that the denomination and location of temporary file folder **801** are unimportant.

The temporary data structure **801** comprises further said sub-directories configured to respectively store varying data types. For instance, a first sub-directory "media" **803** preferably groups input data **609**, **610** and **611**, eg photographs, frame sequences and sound samples respectively. Another sub-directory "HTML" **804** groups all the data files which, when processed by CPU **401** configured by browser **602**, generate standard HTML pages viewable within the graphical user interface of said browser on VDU **307**, wherein said HTML pages are colloquially known as "web" pages.

The temporary data structure or main directory **801** also comprises a default XML script **805**, which will be described in further detail below. Said default script **805** is created by means of the encoder **606** encoding database **607** therein such that, when said script **805** is decoded and processed by a browser-type application **602**, said default web pages stored in sub-directory **804** are updated with both the alphanumeric data initially input in said database **607** and also the various non-alphanumeric data stored in subdirectory **803** and referenced therein.

In effect, the temporary data structure **801** is generated at step **503** as a self contained and self executing application which only requires information data including at least one image and, as such, said temporary directory also includes instruction sets. A first, "autorun", instruction set **806** is generated within directory **801**, the function of which is to configure the central processing unit of any processing system reading the removable data-carrying medium to process the data carried thereon, regardless of the user of such a system effecting such a processing operation. A second, "constructor", instruction set **807** is also generated within directory **801**, the function of which is to create a permanent data structure on the non-volatile storage means of said host processing system in a manner similar to the generation of directory **801** in programmable computer **300**, and extract all of the contents of the removable data-carrying medium in their respective data structures **803**, **804** and **805**, by invoking a decoder module **808** to decode and regenerate the XML script **805** updated by database **607** before it was initially written onto said data-carrying medium. For this purpose, said third "decoder" instruction set **808** is also generated within directory **801** at said step **503**.

Although most operating systems like system **601** feature a basic multi-media processing capability, ie the capacity to process image data **609** for display, this is not always true, and so in the current embodiment of the present invention further format-specific instruction sets **809**, **810** and **811** are generated within directory **801** to configure the central processing units **401** of said eventual host processing system to respectively process image data **609**, frame sequences **610** and sound samples **611** when they are loaded from said data-carrying medium. However in other embodiments of the invention these are not provided.

In the example shown herein child **109** gets lost in a mall in his own country, but if said child **109** got lost during the family holidays in a foreign country, it would be preferable for the contents of said data-carrying medium to be generated in their respective data structures **803**, **804** and **805** in the language of said foreign country. Thus, in another embodiment of the present invention (not shown), an interpreter instruction set is similarly generated, the sole purpose of which is to interrogate the language setting of the operating system **601** of the host processing system in order to configure decoder module **808** to decode and regenerate the XML script **805** in the local language.

### Figure 9

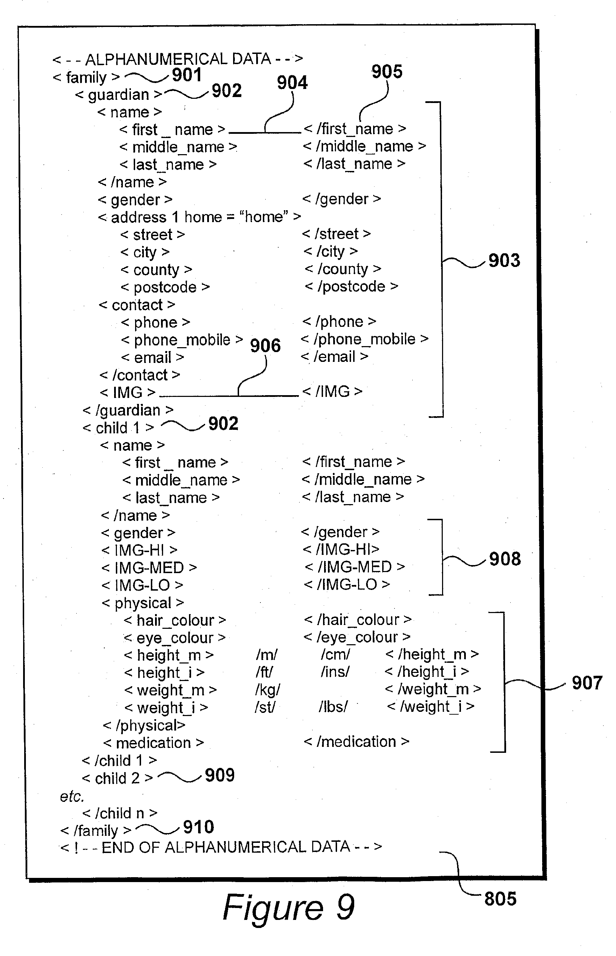

The default XML script **805** shown in *Figure 8* to be updated by means of encoding the database **607** shown in *Figure 6* is described in further detail in *Figure 9.* For the purpose of clarity, said script **805** is shown as uncompiled, edited pseudo XML code.

The extensible market language (XML) is used in this description of the current embodiment of the present invention, but it defines an extremely simple dialect of the standard generalised market language (SGML), the international standard (ISO 8879:1985) for defining descriptions of the structure of different types of electronic documents. XML is a light-weight, cut-down version of SGML, which keeps enough of its functionality to make it useful because it can be used to store any kind of structured information and to enclose or encapsulate information in order to pass it between differing computer systems, which would otherwise be unable to communicate. As such it will be understood that most other variations of mark-up languages and even programming languages, such as C++, may be used. As such the word "encoding" will be understood not to be restricted to creating XML documents as herein described, but to mean the processing of some or all of the data in database **607** into the language used. (The exact meaning of "decoding" should also be understood to vary according to the language used.) The software module which performs this task is an encoding module.

Generally XML documents are made up of storage units called entities, which contain either parsed or unparsed data. Parsed data is made up of characters, some of which form the character data in the document and some of which form mark-up. Mark-up encodes a description of the document's storage layout and logical structure. XML provides a mechanism to impose constraints on the storage layout and logical structure.

In the current embodiment the encoder module is a module called an XML processor. This is used to read XML documents and to provide access to their content and structure. It is assumed that an XML processor is doing its work on behalf of another module, called the application. This specification describes the required behaviour of an XML processor in terms of how it must read XML data and the information it must provide to the application.

The pseudo XML code **901** is shown configured with a structure **902** simplifying the compartmenting of the information data input in respect of each person to be described on said removable media. It was previously explained that said input information data comprises a mix of alphanumeric (**608**), image (**609**, **610**) and aural (**611**) data, wherein said alphanumeric data **608** is stored in database **607** and unique references to said image and aural data **609** to **611** are similarly stored in said database **607**.

It is therefore preferred that the successive entities **902** containing parsed data **903** reflect the field structure of said database **607**. In accordance with the XML general description thereabove, said parsed data **903** thus includes characters, some of which form the character data **904** in the eventual HTML document and some of which form mark-up **905**. According to the current embodiment of the present invention, said character data **904** is input by the user of programmable computer **300** as either said alphanumeric data **608** or generated by application **605** to uniquely reference a media file, as shown at **906**.

According to this embodiment, the data describing the caretaker such as parent **108** and her contact details as well as an image of her are first input. Input data describing a first dependant, structurally shown at **902**, is then input according to step **506** and preferably in further detail as shown at **907** as well as a plurality of images as shown at **908.** If the question asked at step **507** is answered in the affirmative, data describing yet another dependant, such as child **110** structurally shown at **909** is again input by parent **108**, with being structured when encoded from database **607** into XML script **805** similarly to parsed data **903** to **908**, and so on and so forth until all dependants and/or caretakers thereof have been so described, such that the initial structural entity "family" **901** is terminated at **910**. However in an alternative embodiment referred to above each card only contains data referring to a single dependant and so the XML script only contains information relating to that dependant. It will thus be appreciated that the exact structure of the XML script is not important, as long as it can be updated by means of encoding the database **607**.

### Figure 10

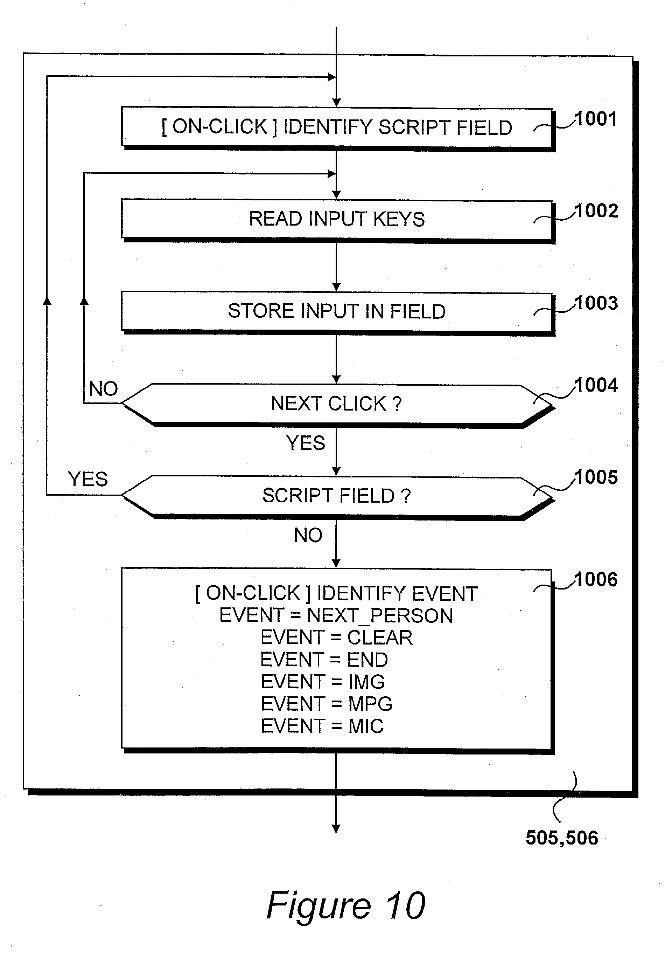

The steps **505** and **506** of inputting and processing data shown in *Figure 6* to update the default XML scripts **805** described in *Figure 9* are detailed in *Figure 10.*

As previously explained, step **504** configures CPU **401** to process input data according to a set of conditional rules which were detailed in *Figure 7.* Thus, any interaction by the user of programmable computer **300** further to step **504** is interpreted by said processing system according to sets of conditional rules, whereby when the caretaker begins the data inputting process according to step **505**, application **605** first identifies the field of database **607** which said user has selected by means of interacting with keyboard **303** or pointing device **304** at step **1001** such that alphanumeric values **608** may be read from said keyboard **303** at step **1002** as the database field update, or value, which may subsequently be stored therein at step **1003**.

A question is then asked at step **1004** as to whether the user, which in this example is parent **108**, has interacted with either keyboard **303** or pointing device **304** and said interaction has produced input data different from an expected alphanumeric value **608**, for instance a numerical value in a field at which, by definition should only contain letters, such as a family name. If the question asked at step **1004** is answered in the negative, control is returned to step **1002**, whereby the next keystroke is read and stored in the field identified according to step **1001** and so on and so forth. Alternatively, the question asked at step **1004** is answered in the affirmative and a second question is asked at step **1005** as to whether said non-alphanumeric input data identifies another database field, for instance if all of said fields are presented to parent **108** on VDU **307** and said parent clicks each subsequent field for data input upon updating each previous one.

Thus if the question asked at step **1005** is answered in the affirmative, control is returned to step **1001**, whereby said field-identifying data input is processed in order to identify said selected field. Alternatively, the question asked at step **1005** is answered in the negative, whereby said input data is processed according to the conditional rules enunciated at step **504** and is treated as identifying an event as opposed to a database field to be processed according to any of processing steps **702**, **704**, **706**, **708**, **710** or **712**.

### Figure 11

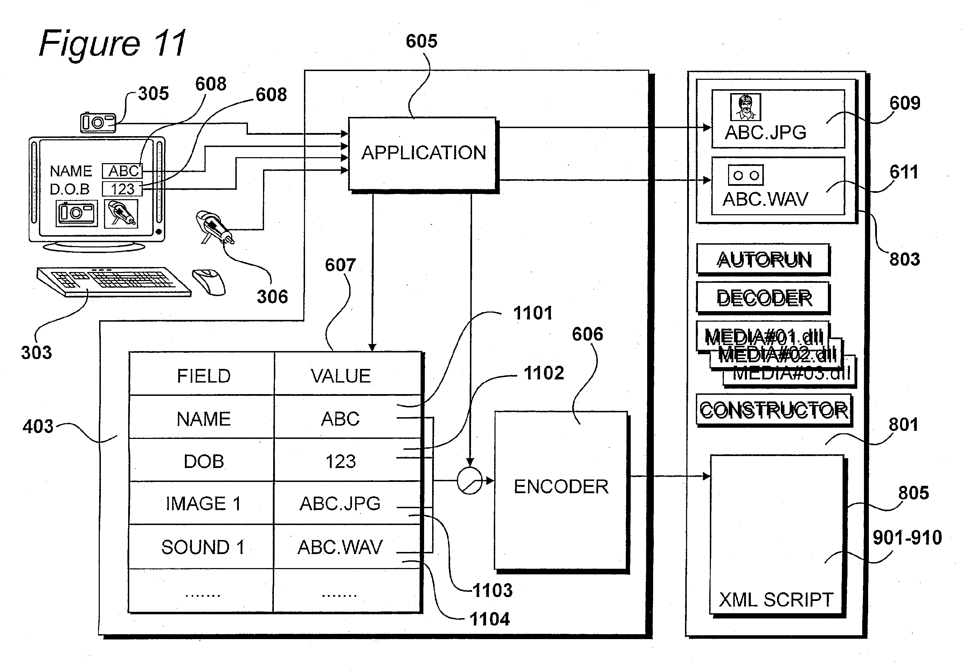

The data processing flow is diagrammatically represented in *Figure 11,* wherein the input data read and stored according to the processing steps shown in *Figures 5*, *7* and *10* is moved to the temporary data structure **805** described in *Figures 8* and *9*, including the step of encoding the database **607** into said default XML script **805**.

The temporary directory **801** is thus shown with all of its default contents **802** to **811**, including the default XML script **805** having XML code **901** to **910** but within which character data **904** has yet to be encoded. In the example, parent **108** wishes to configure a removable data-carrying medium by writing encoded data thereon describing her children **109** and **110**, including at least an image of each child. In accordance with the description of the present embodiment, parent **108** first inputs alphanumeric data **608** by means of keyboard **303**, having identified respective database fields **1101** and **1102** by means of mouse **304**. Upon completing the input of alphanumeric data **608**, parent **108** interacts with mouse **304** to generate an event-triggering processing step **702**, whereby digital camera **305** captures an image **609** of parent **108**, a unique alphanumeric identifier of which is generated by application **605** in database field **1103**.

If required, parent **108** further interacts with mouse **304** to generate an event-triggering processing step **706**, whereby parent **108** provides an analogue voice sample through microphone **306** which is digitised and consequently stored as a sound sample **611**, a unique alphanumeric identifier of which is generated by application **605** in database field **1104**.

Parent **108** then inputs description data for each of her children **109**, **110** in a similar manner and in accordance with the present description until her interaction with mouse **304** identifies an event-triggering processing step **712**, thus triggering the encoding of said input data according to step **508**. Said encoding step comprises application **605** invoking encoder **606** to process all of the alphanumeric values stored in database fields such as field **1101** to **1104** into XML character data **904** to update the full XML script **805** at respective positions. Thus, in the example, the unique alphanumeric reference "ABC.JPG" of the image data **609** representing parent **108** and stored in database field **1103** is encoded by encoder **606** into XML character data **906**, and so on and so forth.

Application **605** writes all of the media-type data **609** to **611** to the media sub-directory **803** of main temporary directory **801** whilst encoder **606** encodes alphanumeric data. Thus, in the example, said image data **609** is moved from memory **403** to said directory **803** on hard disk drive **405**, as is the sound sample **611**.

The above data processing flow is carried out until all of the data input by parent **108** has been respectively encoded and stored in said temporary directory **801**.

### Figure 12

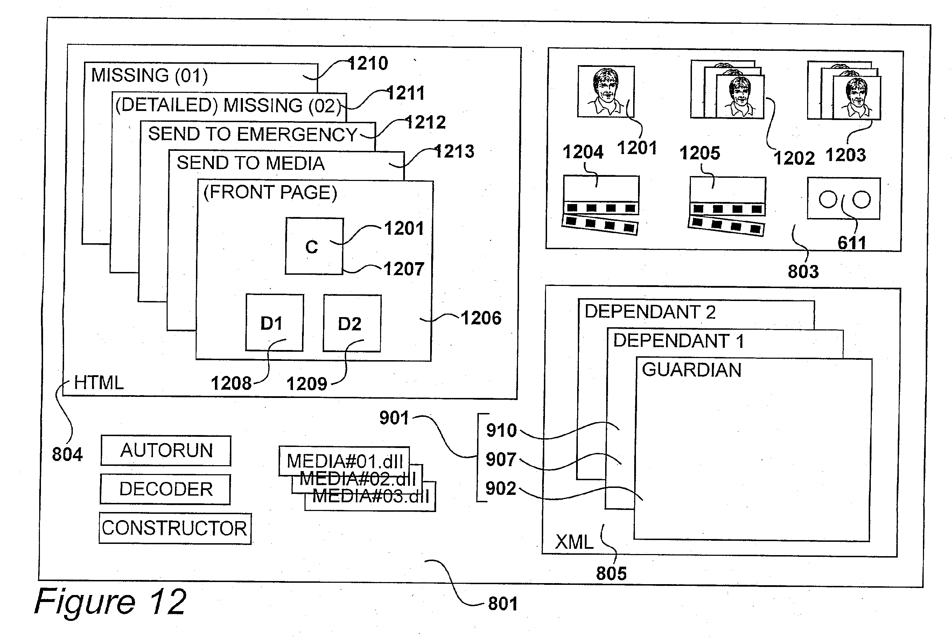

The contents of said temporary main directory **801** shown in *Figures 5,* *8* and *11* upon completing said data processing flow are illustrated in *Figure 12.*

The file folder "temp" **801** is shown and stores the first sub-directory "media" **803**, wherein media input data is stored. In the example, said media input data includes a photograph **1021** of parent **108**, a set **1202** of high, low and medium resolution photographs of child **109** and a set **1203** of high, low and medium resolution photographs of child **110**. Said media input data further includes a voice file **611** of parent **108**, a video clip **1204** of child **109** and a video clip **1205** of child **110**.

The file folder "temp" **801** is also shown as storing the second sub-directory "HTML" **804**, wherein the data files to be processed by CPU **401** configured by a browser application to generate standard HTML pages, respectively define HTML templates within which the above media input data stored in directory **803** and the alphanumeric input data **607**, **608** encoded in XML script **805** will be inserted upon decoding said script **805**.

A first, front HTML page template **1206** is configured by script **805** to display an image of the caretaker at **1207**, such as for instance photograph **1201**, as well as at least one image of each dependant, for instance medium-resolution photographs of children **109**, **110** respectively, at **1208** and **1209**, whereby upon viewing said page **1206** generated by said browser application at any processing system **201** to **213**, a user may readily verify the identity of the caretaker and instantly identify which dependant is lost from its respective photograph.

The HTML templates also include a plurality of pages **1210** to **1213** specifically configured to raise an alert about the dependant identified by means of their respective photograph. Thus, a second page **1210** is configured by script **805** as a 'missing' poster to be printed, featuring at least one image, preferably a high-resolution photograph from the sets **1202** or **1203** depending upon which child is lost, as well as a portion of the child's respective alphanumeric input data, such as a name, surname and date of birth. A third page **1211** is configured by script **805** as an alternative 'missing' poster to be printed, again featuring at least one image, preferably a medium-resolution photograph from the sets **1202** or **1203** depending upon which child is lost, as well as all of the child's respective alphanumeric input data.

Other function-specific pages may be included, such as a fourth page **1212** configured by script **805** as the above 'missing' poster **1211**, thus including all details, to be distributed to emergency services within the networked environment described in *Figure 2,* such as the police. Preferably, a fifth page **1213** is included and configured by script **805** as the above 'missing' poster **1212**, thus including all details but also including media data **611** and **1204**, **1205**, to be distributed to media broadcasting companies within the networked environment described in *Figure 2,* such as television stations, radio stations and newspaper offices.

It will be readily apparent to those skilled in the art that many other HTML templates can be used and that the specific format is not important. Additionally, HTML is a current standard for computers that is easily viewed and shared and so is used in this current embodiment, but any other alternative processable format may be used.

As shown in *Figure 8,* directory **801** further includes instruction sets **806** to **811**. These are unchanged by the data processing flow.

### Figure 13

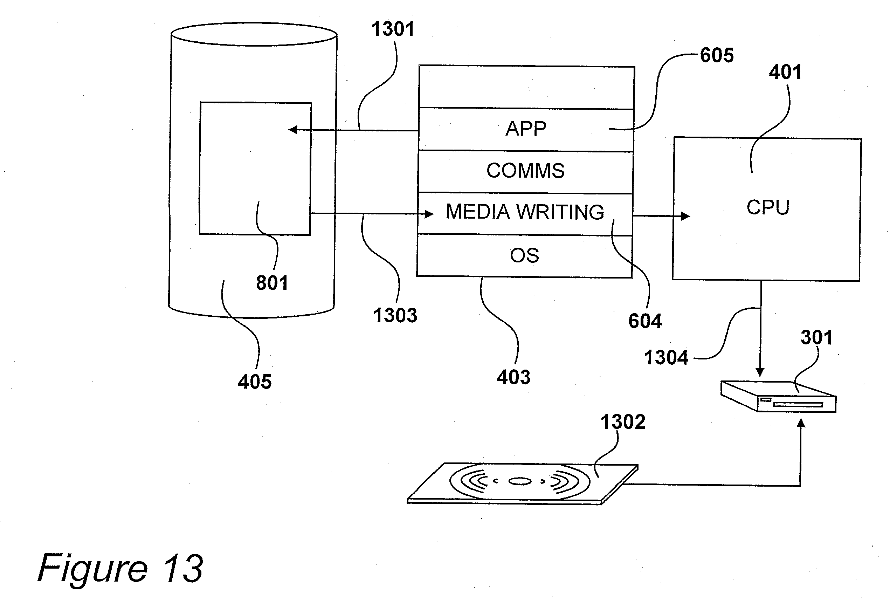

In much the same way as *Figure 11* diagrammatically represents the data processing flow for inputting and decoding data, *Figure 13* provides a diagrammatic representation of the writing flow onto a removable data-carrying medium.

Upon completing the step **508** of encoding the data input by parent **108** whereby application **605** has completed updating the contents of temporary data structure **801** in HDD **405** shown in further detail in *Figure 12* according to the data processing flow summarised in *Figure 11* and schematically shown as **1301**, application **605** next calls for media writing application **603** to configure CPU **401** for writing said updated directory **801** including the encoded data to a removable data-carrying medium **1302** according to step **509** by means of medium writer **301**.

Said media-writing application **603** first fetches (**1303**) all of the data contained in directory **801** that is to be written onto said removable data-carrying medium back into memory **403**, wherein said data is processed by CPU **401** into specific medium-formatted binary data and, when so processed, is then physically written (**1304**) onto medium **1302**. Upon completing said writing operation **509** (**1304**), the medium **1302** may be removed from medium writer **301** and subsequently carried by parent **108**.

Thus removable data-carrying medium **1302** contains several types of data: firstly it contains encoded data in the form of XML script **805**, secondly it contains audio and image data **803**, thirdly it contains HTML templates **804** and fourthly it contains instruction sets **806** to **811**. The first two types of data can together be considered as descriptions of the persons thereon (parent **108** and children **108**, **109**). Although the audio and image data is not itself encoded, the XML script **805** contains the references that explain what each item is, and so, for each person, their entire description is in effect encoded. As discussed previously, other languages could be used to encode the data stored in database **607**, with possibly the image and audio data being encoded also if the need arose, and so an encoded description of a person can be considered as data, including image data representing the person, at least some of which is encoded.

Additionally the HTML pages generated from the templates, which include some or all of data **607** to **611** bound thereto, can be considered as viewable images generated from the descriptions. These are different from the image data in that they contain copies of some or all of the image data but are themselves only viewable images of that data. As previously described the format of the templates could be anything considered appropriate by the operators of a system such as herein described, and so the viewable image could comprise any alphanumeric, audio or image data in addition to the image of the lost dependent person. In other embodiments it is feasible that the HTML templates could be contained within the processing system **207** rather than on the removable data-carrying medium **1302**, with the security officer prompted for their location on inserting medium **1302**. This would allow the security force conducting the search to choose the format of the pages, rather than the company that issues the cards.

Thus the removable data-carrying medium has on it an encoded description of a dependent person, said encoded description including image data representing said person. It also has on it instruction sets that configure a computer to decode and read an encoded description of a dependent person, create a viewable image therefrom and distribute said viewable image.

### Figure 14

In the current embodiment of the present invention, said removable data-carrying medium **1302** is a credit card-sized and -shaped compact disc but it will be readily apparent to those skilled in the art that many other types of removable data-carrying media may store encoded data. Accordingly, alternative removable data-carrying media are shown in *Figure 14,* onto which the final encoded data **801** may be written.

The use of the word "removable" in this description refers to the fact that the data-carrying medium is designed to be removed from the medium writer which wrote the data to it and transported to any other location. It may subsequently be placed in the same medium writer, or, more pertinently, in a similar one on a different computer to be read or, if possible, to have further data written to it. For example, hard disk drive **405** is not a removable data-carrying medium because although it could be removed from computer 300 it would be difficult to do so, and also difficult to place it within another computer.

However, although the media described below must all be physically placed within a data-writing or input means to be written to or read from respectively, the definition also comprehends wireless writing of data, for example it is now possible to download files to a cellphone. Thus the phrase "removable data-carrying medium" includes any medium that is easily transportable by an individual, and that can have information written to and read from it by any computer that is configured to do so. The media described below all fall within this definition.

The credit card-type CD medium is here preferred because it offers an advantageous compromise between data storage capacity and medium size. Indeed the medium **1302** of the current embodiment may easily be stored in a wallet like a business card or a credit card and thus is much more likely to be carried by the caretaker, eg parent **108**, at the time of either of her dependent children **109**, **110** becoming lost. Said medium **1302** is also known as a "CD card" or more colloquially as a "saddle card" and is an optical-based data storage device having a storage capacity comprised between twenty five and one hundred and twenty five megabytes.

A first alternative is a mini-CD-R **1401**, having a standard storage capacity of one hundred and eighty five megabytes. Such a medium would be particularly suited in situations where caretakers require fairly exhaustive information, including lengthy video clips **610**, for many dependent persons. This might be particularly useful for a teacher accompanying a school trip. Medium **1401** is however much less practical an item to carry in purses or wallets on a regular basis.

A second alternative is for the data to be written to a high speed, solid state memory card NAND-based flash memory technology in conjunction with an ATA controller chip set. This type of removable data-carrying medium is not optical like media **1302** and **1401** but emulates a bulk storage device such as hard disk drive **405**, thus providing the capability to easily capture, retain and transport data including audio and image data. Various types of memory cards **1402** briefly comprise ATA flash memory PC cards, compactflash memory cards, smartmedia memory cards and SRAM memory cards. Memory cards of this type feature a storage capacity comparable to CD card **1302**. Advantageously, data such as final encoded data **801** written thereto may be accessed and updated repeatedly on memory cards **1402**, while said data written to media **1302** or **1401** may not be updated on said optical media with currently-available technology.

A third alternative removable data-carrying medium is a smart card **1403**. Like CD card **1302** and memory card **1402**, the smart card **1403** is also credit card-sized but, unlike said media **1302** and **1402**, it is preferably made of flexible plastic, such as polyvinyl chloride or PVC. The smart card **1403** is embedded with a micro module containing a single silicon integrated circuit chip having certain key components that allow it to execute instructions supporting the card's functionality. It features a micro processor unit which executes programmed instructions, an input-output controller managing the flow of data between a card acceptance device (the card reader) and the above micro processor, a program memory within which the instructions executed by the micro processor units are permanently stored by the micro module manufacturer. It also features random access memory comparable to memory **403** of processing system **300** and, finally, application memory which is almost always EPROM (electrically erasable programmable read-only memory), within which the final encoded data **801** would be written. Although smart card **1403** has a much smaller data storage capacity than any of media **1302, 1401** and **1402**, its cost is negligible compared to said media and it is much more durable whilst featuring the same data-updating facility as medium **1402**.

It will be understood by those skilled in the art that the above removable data-carrying media are here described as examples only and that the present description is not limited thereto. This area of technology is fast-moving and so it is not possible to give an exhaustive list of the options.

### Figure 15

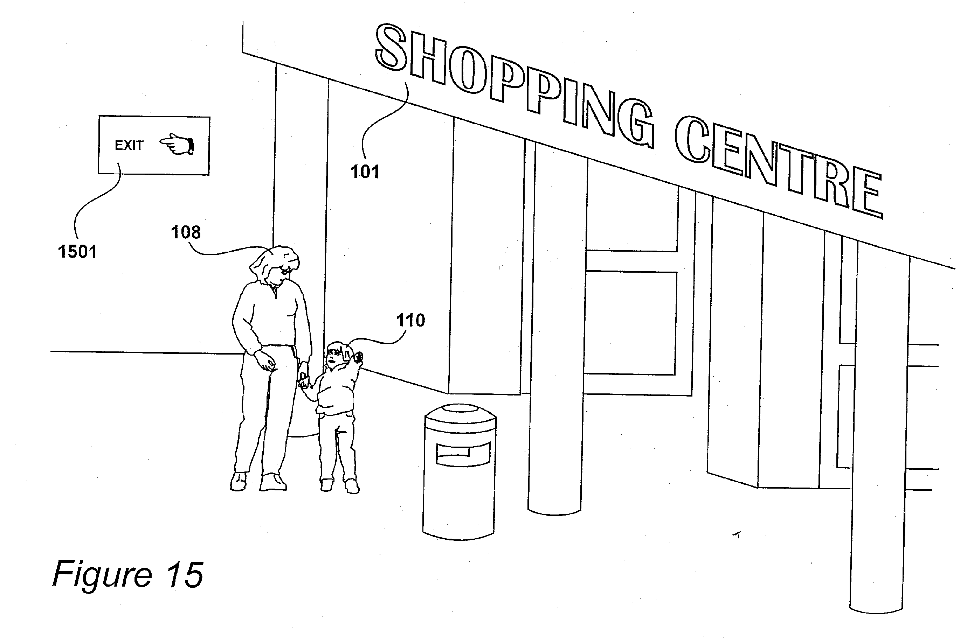

*Figure 15* shows parent **108** becoming aware of the absence of child **109** upon exiting (**1501**) the shopping mall **101**, having previously written an encoded description **801** including at least one image **1208**, **1209** of each child **109**, **110** respectively onto the removable data-carrying medium **1302**. In the example, parent **108** and child **110** were distracted by the goods on display in the window of shop **103**, while child **109** was similarly distracted away from parent **108** by the goods on display in the window of shop **102**. Child **109** walked away from the family group and got lost.

### Figure 16

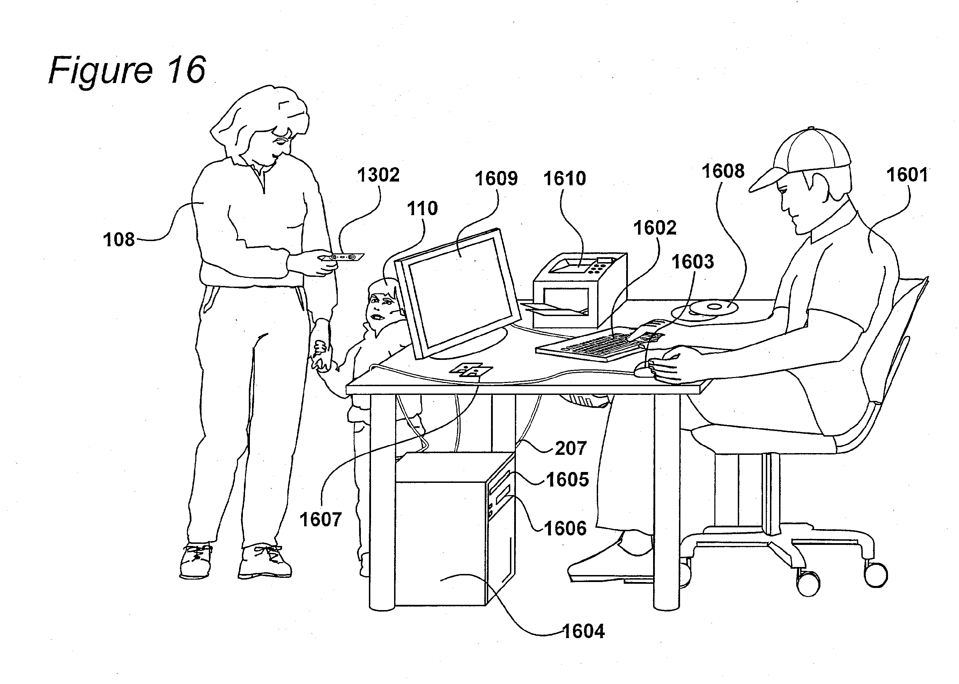

Parent **108** then immediately contacts the security force of mall **101** for assistance and provides the security officer that is operating security force processing system **207** with removable data-carrying medium **1302**, as shown in *Figure 16.*

The processing system **207** operated by security officer **1601** preferably comprises standard features, whereby manual input is provided via a keyboard **1602** and a mouse **1603** to a programmable computer **1604**. Said programmable computer **1604** is equipped with a drive **1605** for receiving optical media, such as media **1302**, as well as a drive **1606** for receiving magnetic disks, such as standard floppy disk **1607**. Drive **1605** can be considered as input means configured to receive a removable data-carrying medium. Clearly if other types of media are used, as described with reference to *Figure 14,* other input means must be used also. While the embodiments shown in *Figure 14* are received within an input means by being physically placed inside it, any communication between a removable data-carrying medium and an interface is comprehended by the word "receive", since if a wireless input means is used no physical contact between the medium and the input means is necessary.

Computer **1604** may also receive program instructions via an appropriate CD-ROM **1608** or from disk **1607** and output data may be written thereto. Moreover, instructions may be transmitted to and received from the internet **202**, to which computer **1604** is connected as described in *Figure 2.* Output data processed by computer **1604** is preferably visualised on a video display unit **1609**. It can also be printed on printer **1610**.

### Figure 17

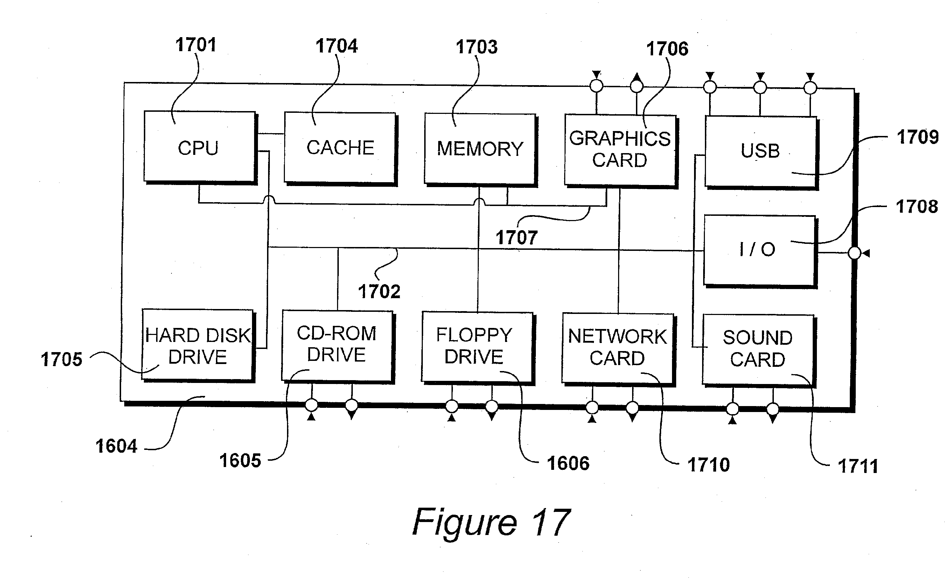

The components of computer **1604** are further detailed in *Figure 17.* The system includes a Pentium 4™ central processing unit (CPU) **1701** which fetches and executes instructions and manipulates data via a system bus **1702** providing connectivity with a larger main memory **1703**, CD-ROM reader **1605**, floppy-disk drive **1606** and other components which will be further detailed below. System bus **1702** is, for instance, a crossbar switch or other such bus connectivity logic. CPU **1701** is configured with a high-speed cache **1704** comprising between two hundred and fifty-six and five hundred and twelve kilobytes, which stores frequently-accessed instructions and data to reduce fetching operations from larger memory **1703**. Memory **1703** comprises between two hundred and fifty-six megabytes and one gigabyte of dynamic randomly accessible memory and stores executable programs which, along with data, are received via said bus **1702** from a hard disk drive **1705**. Hard disk drive (HDD) **1705** provides non-volatile bulk storage of instructions and data.

A graphics card **1706** receives graphics data from the CPU **1701**, along with graphics instructions. Said graphics accelerator **1706** is preferably coupled to the CPU **1701** by means of a direct port **1707**, such as the advanced graphics port (AGP) promulgated by the Intel Corporation, the bandwidth of which exceeds the bandwidth of bus **1702**. Preferably, the graphics card **1706** includes substantial dedicated graphical processing capabilities, so that the CPU **1701** is not burdened with computationally intensive tasks for which it is not optimised.

Input/output interface **1708** provides standard connectivity to peripherals such as keyboard **1602** and mouse **1603**. A Universal Serial Bus (USB) **1709** is provided as an alternative means of providing connectivity to peripherals such as keyboard **1602** and mouse **1603**, whereby said connectivity is improved with a faster bandwidth for user input data transfer. Output means is preferably provided in this example by network card **1710**, which provides connectivity to the internet **202** by processing a plurality of communication protocols. However it could in other embodiments be provided by a network card configured for an internal network, if the dependant's description is only to be distributed over a limited area. Output means is also, but less preferably, provided by the printer. A sound card **1711** is provided which receives sound data from the CPU **1701** over system bus **1702** along with sound processing instructions, or analogue sound data from the microphone **306** to be digitised therein, in a manner similar to graphics card **1706**. Preferably, the sound card **1711** includes substantial dedicated digital sound processing capabilities, so that the CPU **1701** is not burdened with computationally intensive tasks for which it is not optimised.

The equipment shown in *Figure 17* constitutes an inexpensive programmable computer of fairly standard type, such as a programmable computer known to those skilled in the art as an IBM™ PC compatible or an Apple™ Mac. It will be readily apparent that it differs only in immaterial details from the equipment shown in *Figure 4.* Like the computer shown in *Figure 4,* it is only an example and any computer having the necessary components could be used.

In this example computer **300** can read and write to the removable data-carrying medium whereas processing system **207** can only read, but in other embodiments processing system **207** could also write to the medium. It is also possible that the two computers could actually be the same, ie that the security force is responsible for issuing the removable data-carrying media.

### Figure 18

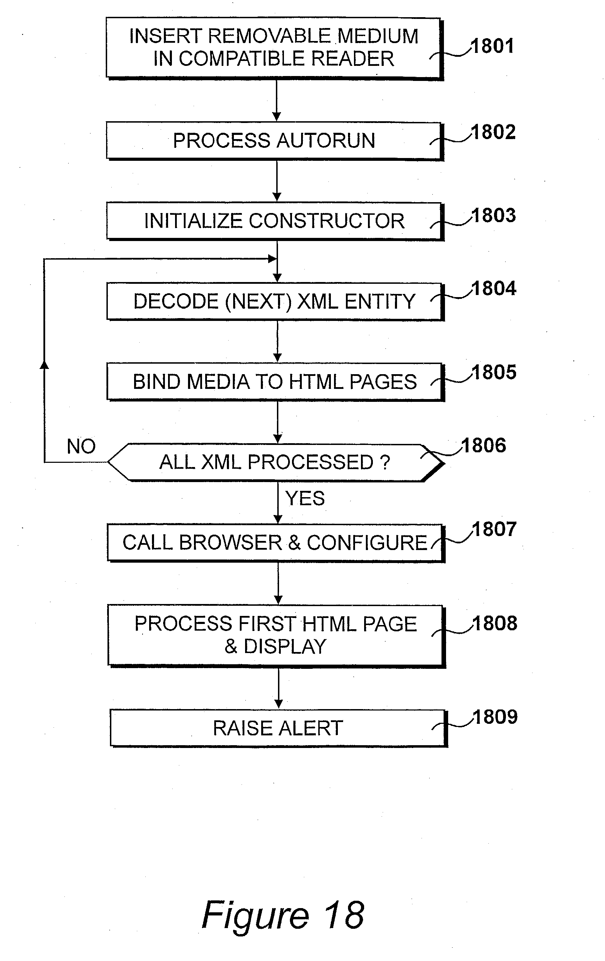

Actions performed at the programmable computer **1604** upon parent **108** handing over removable medium **1302** to security officer **1601** and said medium **1302** being received by optical media drive **1605** in order to read, decode and display or broadcast data relating to lost child **109** are summarised in *Figure 18.*

At step **1801**, security officer **1601** inserts the removable card CD **1302** into the CD reading device **1605,** whereby the autorun instruction set **806** is immediately processed at step **1802** by CPU **1701** in accordance with the principle described in *Figure 8.*

Thus, the second, constructor, instruction set **807** is initialised at step **1803** and creates a permanent file folder, in the example a "temp" directory, on the root of hard disk drive **1705**. Upon creating a local copy of directory **801**, constructor **807** starts to generate HTML pages therein having decoded data, including at least one image **609** thereon, by means of invoking the decoding module **808** to decode the XML script **805** written at step **509**.

Said decoding module **808** interactively processes entities **901** to **910**, whereby upon parsing media data-indicative mark-up XML code it binds the corresponding media to the corresponding HTML page location at step **1805**. Thus, in the example, said decoding module **808** would parse marker **906** and bind the image data **609** to HTML page location **1201**.

At step **1806** a question is asked as to whether all of the XML entities have been processed. If the question is answered in the negative, control is returned to step **1804,** whereby the next entity in XML script **805** is processed, eg decoded. Alternatively, the question asked at step **1806** is answered in the affirmative, signifying that all of the HTML pages including decoded data and at least said image data **609** have been generated within the directory created at step **1803**. The constructor's last task at step **1807** is to call a browser-type application preferably stored in memory **1703** and comparable in functionality to browser **602**, to start processing the HTML pages generated between steps **1803** to **1806** at step **1808** for output and display on VDU **1609**.

In the present embodiment, said step **1807** of calling said browser-type application further comprises the step of configuring said browser-type application with dynamically loaded modules, also known as plugins, to process media data such as data **609** to **611** which the browser may not be initially configured to process, wherein said plugins are instruction sets **809** to **811**.

Upon said browser application displaying said first HTML page **1202** on to said VDU **1609**, security officer **1601** now raises a "missing dependant" alert at step **1809** by distributing all or a portion of the input data **608** to **611** decoded at step **1804** and regenerated within said HTML page **1202**.

### Figure 19

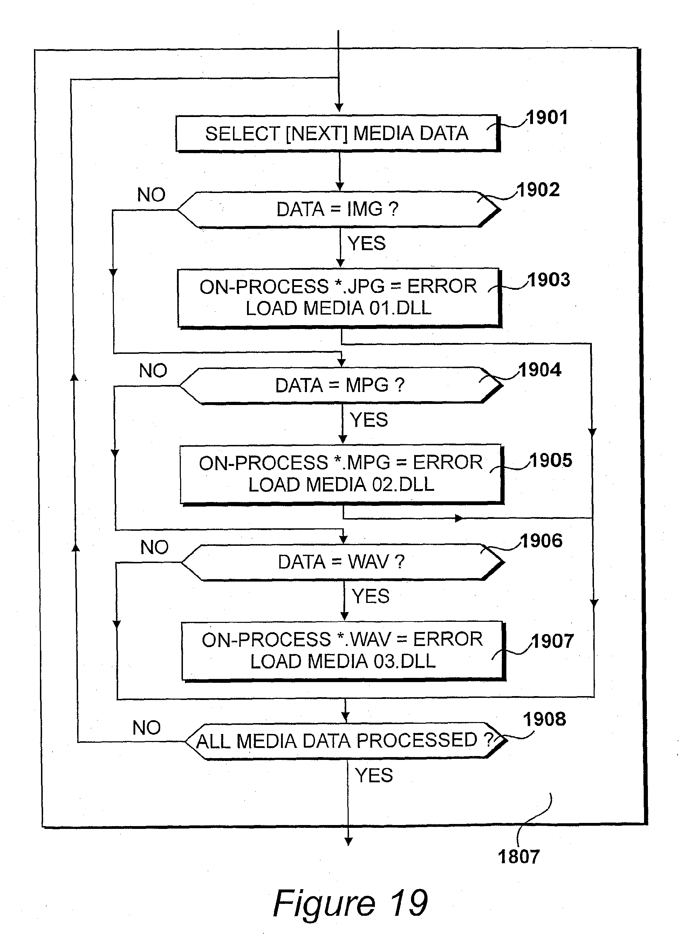

The step **1807** of configuring the browser-type application to process media data stored in folder **803** for binding at the next step **1808** and subsequent broadcasting at step **1809** is further described in *Figure 19.*

At step **1901** the first media data **609**, **610** or **611** is selected for processing, whereby a first question is asked at step **1902** as to whether said media data is image data **609**. If the question of **1902** is answered in the affirmative, a first HTML processing condition is stated, whereby if the browser attempts to process said image data **609** at the next step **1808** and returns an error, said browser should load the first specific media processing plugin **809** at step **1903**. Control is then forwarded to step **1908**.

Alternatively, the question asked at step **1902** is answered in the negative whereby a second question is asked at step **1904** as to whether said media data is videoclip data **610**. If the question of **1904** is answered in the affirmative, a second HTML processing condition is stated, whereby if the browser attempts to process said videoclip data **610** at the next step **1808** and returns an error, said browser should load the second specific media processing plugin **810** at step **1905**. Control is then forwarded to step **1908**.

Alternatively, the question asked at step **1904** is answered in the negative whereby a third question is asked at step **1906** as to whether said media data is audio data **611**. If the question of **1906** is answered in the affirmative, a third HTML processing condition is stated, whereby if the browser attempts to process said audio data **611** at the next step **1808** and returns an error, said browser should load the third specific media processing plugin **811** at step **1907**. Control is then forwarded to step **1908**.

Alternatively, the question asked at step **1906** is answered in the negative whereby a last question is asked at said step **1908** as to whether all of said media data has been pre-processed for the purpose of initialising said plugins **809**, **810** and **811** according to steps **1903**, **1905** and **1907** respectively. If the question at **1908** is answered in the negative, control is returned to step **1901**. Alternatively, all of the media data stored in folder **803** has been pre-processed and may now be processed for binding at respective locations of the constructed HTML pages **1206** and **1210** to **1213**.

### Figure 20

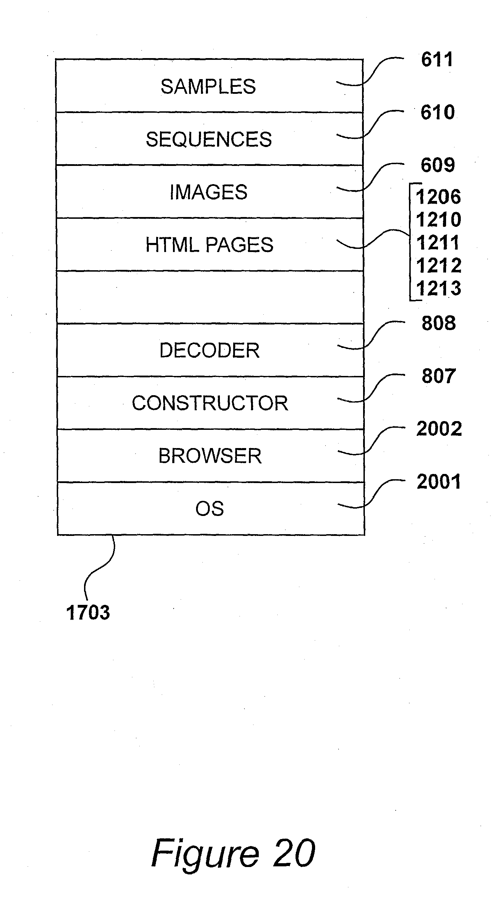

The contents of main memory **1703** subsequent to completing the binding step **1808** described in *Figures 18* and *19* are further detailed in *Figure 20.*

An operating system is shown at **2001** which comprises a reduced set of instructions for CPU **1701**, the purpose of which is to provide computer **1604** with basic functionality. Examples of basic functions include for instance access to files stored on hard disk drive **1705** or accessed from CD-ROM drive **1605** or disk drive **1606** and management thereof, network connectivity with network server **203** and the Internet **202**, interpretation and processing of the input from keyboard **1602** and mouse **1603**. In the example, the operating system is Windows Millennium Edition™ provided by the Microsoft corporation of Redmond, California, but it will be apparent to those skilled in the art that the instructions herein described may be easily adapted to function under different other known operating systems, such as other versions of the Windows operating system, MAC OS-X™ provided by Apple Corporation, IRIX™ provided by Silicon Graphics Inc, or LINUX, which is freely distributed.

An internet browser application is shown at **2002**, which processes both hypertext mark-up language (HTML) and extended mark-up language (XML) coded data packets or other internet-specific formatted data into graphical data for display on VDU **1609**. Said browser **2002** is the application called by the constructor **807** according to step **1807**. Upon said constructor **807** successfully invoking said browser **2002** for processing constructed HTML pages **1206** and **1210** to **1213** for display on VDU **1609**, both said constructor **807** and the decoder **808** will be deleted from memory **1703** as their functionality is no longer required.

Said HTML pages **1206** and **1210** to **1213** are shown along with media data **609** to **611**, all of which were copied from removable data-carrying medium **1302** to the "temp" directory in their respective file folders **804**, **803**, the respective layout, contents and position thereof having been generated when processing the XML script **805** at step **1804**, whereby said pages are subsequently loaded into memory **1703** at step **1808**.

### Figure 21

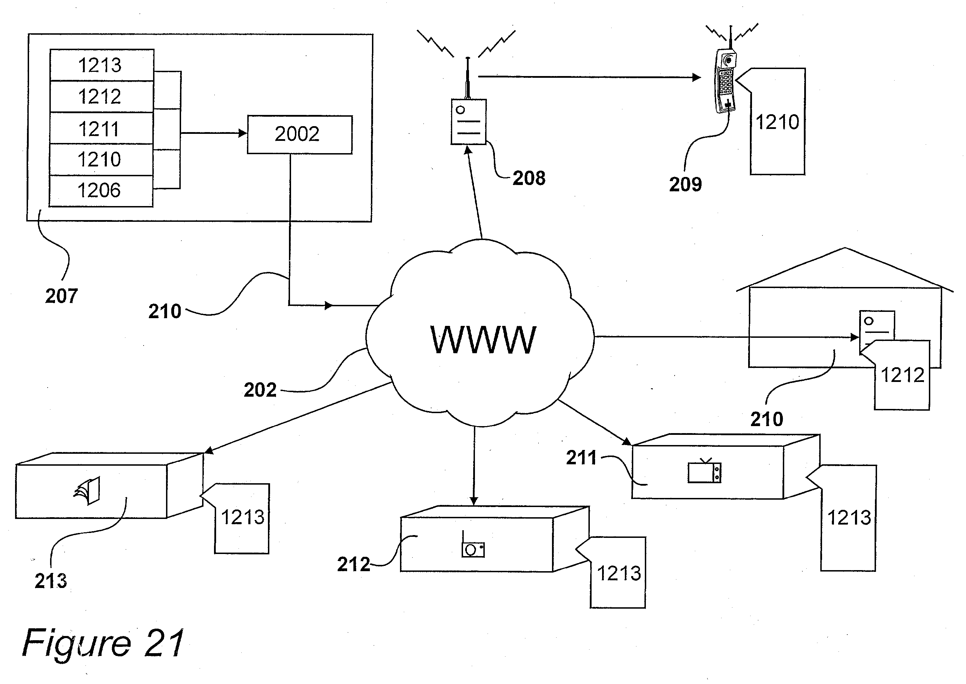

HTML pages **1206** and **1210** to **1213** having respective media data **609** to **611** bound thereto may now be broadcast to raise an alert about the lost dependant according to step **1809**, who in the example is child **109**. Said alert may be raised by means of officer **1601** locally printing any of said HTML pages which include at least one image of child **109** from the set **1202**. Preferably, however, said broadcasting is made across the networked environment first shown in *Figure 2* and is described in further detail in *Figure 21.*

In the example, security officer **1601** operates security force network server **207**, which is connected to the internet **202** and via which HTML pages stored in memory **1703** and/or any of the media data stored in folder **803** may be distributed to any addressable location connected thereto. Said distribution is preferably effected by browser **2002**, which is an application best-configured for processing said data according to the network's distribution protocol, TCP/IP. It will be evident to those skilled in the art that many other protocols, such as NetBUI or IPX/SPX for cabled networks, or WAP (Wireless Application Protocol) for wireless networks, may perform the above distribution in various network environments, such as Wireless, Wide-Area or Local Area Networks.

In order to rapidly reunite separated dependent child **109** with responsible parent **108**, the extent of the alert raised at step **1809** is maximised, wherein the HTML pages **1206** and **1210** to **1213** are selectively distributed to said addressable locations. Thus, HTML page **1210** containing only essential alphanumeric data and, most importantly, a photograph of child **109** from the set **1202**, is distributed by server **207** to networked server **208** such that said page **1210** may be wirelessly distributed to mobile telephone handsets **209** carried by other security officers patrolling shopping mall **101**, whereby said security officers may now rapidly identify child **109** by sight.

Preferably, page **1212** containing all of the input data **607**, **608** describing child **109** and a photograph of child **109** from the set **1202**, is distributed to processing system **210** operated by the police, whereby police officers may now also rapidly identify child **109** by sight, as well as broadcast said description across their own communication networks (not shown).

Similarly, page **1213** containing all of the input data **608** describing child **109**, a photograph of child **109** from the set **1202** as well as other media data **611** and **1204**, is distributed to processing systems **211**, **212** and **213** respectively located at a television broadcasting facility, a radio broadcasting facility and a newspaper office, for the purpose of broadening the alerts if so required. Thus, said television broadcasting facility may broadcast either said photograph **1202** or said videoclip **1204** or both; said radio broadcasting facility may broadcast a description based upon alphanumeric data **608** as well as audio data **611** and said newspaper office may publish and print a description based upon alphanumeric data **608** as well as a high-resolution photograph from set **1202**.

In all instances, the benefit is clear in that all of the entities involved in raising the alert upon distributing any of pages **1206** and **1210** to **1213** use the same description based upon said input data **608**, wherein said description includes at least one image **1202** and thus efforts in locating child **109** can proceed immediately upon parent **108** handing over media **1302** storing said description data.

## Claims

1. A method of locating a dependent person that has become separated from their caretaker in a high-density environment, comprising the steps of
receiving from said caretaker a removable data-carrying medium containing a description of said dependent person;
reading said description from said medium;
distributing said description to a plurality of locations.

2. A method according to claim **1**, wherein said high-density environment is a shopping mall.

3. A method according to either of claims **1** or **2**, wherein said dependent person is a child.

4. A method according to any of claims **1** to **3**, wherein said description includes image data representing said dependent person.

5. A method according to any of claims **1** to **4**, wherein said description is encoded.

6. A method according to any of claims **1** to **5**, wherein removable data-carrying medium is a CD-card.

7. A method according to any of claims **1** to **6**, wherein said removable data-carrying medium additionally contains instructions that configure a computer to carry out said steps of reading and distributing said description.

8. Apparatus for raising an alert to a situation in which a dependent person has become separated from their caretaker, comprising input means configured to receive a removable data-carrying medium, processing means and output means; wherein said processing means is configured to
receive from said removable data-carrying medium, via said input means, an encoded description of said dependent person, including image data representing said person, and instructions that configure said processing means to perform the steps of:
reading and decoding said encoded description in order to generate a viewable image, and
distributing, via said output means, said viewable image to a plurality of locations.

9. Apparatus according to claim **8**, wherein said encoded description is digital data and said removable data-carrying medium is configured with optical data storage means.

10. Apparatus according to claim **8**, wherein said encoded description is digital data and said removable data-carrying medium is configured with magnetic data storage means.

11. Apparatus according to any of claims **8** to **10**, wherein said processing means further receives from said removable data-carrying medium an encoded description of said caretaker.

12. Apparatus according to any of claims **8** to **11**, wherein said processing means decodes said encoded description by means of a decoder module included in said instructions.

13. Apparatus according to claim **12**, wherein said decoder module parses said encoded description and upon finding a marker for image data binds said image data to a template to generate said viewable image.

14. Apparatus according to any of claims **8** to **13**, wherein said instructions include a plug-in that enables said processing means to read said image data.

15. Apparatus according to any of claims **8** to **14**, wherein said encoded description further includes data representing a sequence of image frames defining a video sequence.

16. Apparatus according to claim **15**, wherein said instructions include a plug-in that enables said processing means to read said video sequence.

17. Apparatus according to any of claims **8** to **16**, wherein said encoded description further includes a sound sample.

18. Apparatus according to claim **17**, wherein said instructions include a plug-in that enables said processing means to read said sound sample.

19. Apparatus according to any of claims **8** to **18**, wherein said apparatus and said plurality of locations are connected by a cable network, a wireless network or a combination thereof.

20. Apparatus according to claim **19**, wherein said output means distributes said viewable image to said plurality of locations by means of printing or broadcasting said viewable image or sharing the decoded description, or a combination thereof.

21. Apparatus according to any of claims **8** to **20**, wherein said apparatus further receives at least one HTML template from said removable data-carrying medium.

22. Apparatus according to claim **21**, wherein said viewable image is generated by binding at least said image data to one of said HTML templates.

23. Apparatus according to any of claims 8 to 22, wherein said instructions include an interpreter module.

24. In a facility open to members of the public in which at least one dependent person is escorted by at least one caretaker, a method of raising an alert to a situation in which a dependent person has become separated from their caretaker, comprising the steps of:
receiving a removable data-carrying medium from said caretaker having an encoded description thereon of said separated dependant, including image data representing said dependant;
reading and decoding said encoded description to generate a viewable image; and
distributing said viewable image to a plurality of locations around said facility.

25. A method according to claim **24**, wherein said encoded description is digital data and said removable data-carrying medium is configured with optical data storage means.

26. A method according to claim **24**, wherein said encoded description is digital data and said removable data-carrying medium is configured with magnetic data storage means.

27. A method according to any of claims **24** to **26**, wherein said encoded description further includes data representing a sequence of image frames defining a video sequence.

28. A method according any of claims **24** to **27**, wherein said encoded description further includes a sound sample.

29. A method according to any of claims **24** to **28**, wherein said processing means decodes said encoded description by means of a decoder module.

30. A method according to any of claims **24** to **29**, wherein said plurality of locations are connected by a cable network, a wireless network or a combination thereof.

31. A method according to claim **30**, wherein said output means outputs said viewable image to said plurality of locations by means of printing or broadcasting said viewable image or sharing the decoded data thereof, or a combination thereof.

32. A method according to any of claims **24** to **31**, wherein said viewable image is generated by binding said image data to an HTML template.

33. A removable data-carrying medium having thereon an encoded description of a dependent person separated from their caretaker, including image data representing said dependent person, and computer-readable instructions executable by a computer, wherein said instructions configure a computer to raise an alert by performing the steps of
reading and decoding said encoded description;
generating a viewable image from said decoded description; and
outputting said viewable image to a plurality of locations.

34. A removable data-carrying medium according to claim **33**, wherein said encoded description is digital data and said removable data-carrying medium is configured with optical data storage means.

35. A removable data-carrying medium according to claim **34**, wherein said removable data-carrying medium is a CD-card.

36. A removable data-carrying medium according to claim **34**, wherein said removable data-carrying medium is a mini CD-ROM.

37. A removable data-carrying medium according to claim **33**, wherein said encoded description is digital data and said removable data-carrying medium is configured with magnetic data storage means.

38. A removable data-carrying medium according to claim **37**, wherein said removable data-carrying medium comprises solid state memory.

39. A removable data-carrying medium according to any of claims **33** to **38**, further having thereon an encoded description of said caretaker.

40. A removable data-carrying medium according to any of claims **33** to **39**, further having thereon at least one encoded description of a further dependant.

41. A removable data-carrying medium according to any of claims **33** to **40**, wherein said instructions include a plug-in that enables said computer to read said image data.

42. A removable data-carrying medium according to any of claims **33** to **41**, wherein said encoded description further includes data representing a sequence of image frames defining a video sequence.

43. A removable data-carrying medium according to claim **42**, wherein said instructions include a plug-in that enables said computer to read said video sequence.

44. A removable data-carrying medium according to any of claims **33** to **43**, wherein said encoded description further includes a sound sample.

45. A removable data-carrying medium according to claim **44**, wherein said instructions include a plug-in that enables said computer to read said sound sample.

46. A removable data-carrying medium according to any of claims **33** to **45**, further having thereon at least one HTML template.

47. A removable data-carrying medium according to claim **46**, wherein said step of generating a viewable image is performed by binding at least said image data to one of said HTML templates.

48. A removable data-carrying medium according to any of claims **33** to **47**, wherein said instructions include an interpreter module.

49. A computer system programmed to raise an alert, comprising memory means, processing means, input means suitable for receiving a removable data-carrying medium having thereon an encoded description of a dependent person separated from their caretaker, including image data representing said dependent person, and output means; wherein said removable data-carrying medium stores instructions which program said computer to perform the steps of
reading and decoding said encoded description by means of said processing means to said memory means in order to generate a viewable image from said description; and
distributing, via said output means, said image to a plurality of locations.

50. A computer system programmed according to claim **49**, wherein said processing means decodes said encoded description by means of a decoder module.

51. A computer system programmed according to either of claims **49** or **50**, wherein said instructions include an interpreter module.

52. A computer system programmed according to any of claims **49** to **51**, wherein said instructions include a plug-in that enables said processing means to read said image data.

53. A computer system programmed according to any of claims **49** to **52**, wherein said encoded description further includes data representing a sequence of image frames defining a video sequence.

54. A computer system programmed according to claim **53**, wherein said instructions include a plug-in that enables said processing means to read said video sequence.

55. A computer system programmed according to any of claims **49** to **54**, wherein said encoded description further includes a sound sample.

56. A computer system programmed according to claim **55**, wherein said instructions include a plug-in that enables said processing means to read said sound sample.

57. A computer system programmed according to any of claims **49** to **56**, wherein said computer and said plurality of locations are connected by a cable network, a wireless network or a combination thereof.

58. A computer system programmed according to claim **57**, wherein said output means distributes said viewable image to said plurality of locations by means of printing or broadcasting said viewable image or sharing the decoded description, or a combination thereof.

59. A computer system programmed according to any of claims **49** to **58**, wherein said viewable image is generated by binding at least said image data to an HTML template.

60. Apparatus for encoding data and writing said encoded data onto a removable data-carrying medium, said apparatus comprising memory means, image data input means, alphanumeric data input means, processing means and data-writing means; wherein said processing means is configured to perform the steps of
receiving data comprising a description of a dependent person from said image data input means and from said alphanumeric data input means, wherein said description comprises image data representing said dependent person and alphanumeric data;
referencing said data in a database;
encoding said description by means of processing said database with an encoder module; and
writing, via said data-writing means, said encoded description onto said removable data-carrying medium.

61. Apparatus according to claim **60**, wherein said data further comprises a description of a caretaker of said dependent person and said further description is also encoded and written to said medium.

62. Apparatus according to claim **61**, wherein said data further comprises descriptions of at least one further person dependent on said caretaker and said further descriptions are also encoded and written to said medium.

63. Apparatus according to any of claims **60** to **62** further comprising audio data input means and video data input means, wherein said description of said dependent person further includes audio and video data received from said audio and video data input means.

64. Apparatus according to any of claims **60** to **63**, wherein said encoded description is digital data and said removable data-carrying medium is configured with optical data storage means.

65. Apparatus according to any of claims **60** to **63**, wherein said encoded description is digital data and said removable data-carrying medium is configured with magnetic data storage means.

66. Apparatus according to any of claims **60** to **65**, wherein said encoder module processes said database into a script.

67. Apparatus according to any of claims **60** to **66**, wherein said script is an extended mark-up language (XML) script.

68. Apparatus according to any of claims **60** to **67**, wherein said processing means is further configured to perform the step of writing an instruction set to said removable data-carrying medium.

69. Apparatus according to any of claims **60** to **68**, wherein said processing means is further configured to perform the step of writing at least one HTML template to said removable data-carrying medium.

70. A method of encoding writing data onto a removable data-carrying medium, said method comprising the steps of
obtaining a description of a dependent person comprising image data representing said person and alphanumeric data;
referencing said image data and alphanumeric data in a database;
encoding said description by means of processing said database with an encoder module; and
writing said encoded description onto said removable data-carrying medium.

71. A method according to claim **70**, wherein said description further includes audio and video data and said audio and video data is also referenced in said database.

72. A method according to either of claims **70** or **71**, wherein said encoded description is digital data and said removable data-carrying medium is configured with optical data storage means.

73. A method according to any of claims **70** to **72**, wherein said encoded description is digital data and said removable data-carrying medium is configured with magnetic data storage means.

74. A method according to any of claims **70** to **73**, wherein said encoder module processes said database into a script.

75. A method according to claim **74**, wherein said script is an extended mark-up language (XML) script.

76. A method according to any of claims **70** to **75**, further comprising the step of writing an instruction set to said removable data-carrying medium.

77. A method according to any of claims **70** to **76**, further comprising the step of writing at least one HTML template to said removable data-carrying medium.

78. A computer-readable medium having computer-readable instructions executable by a computer, wherein said instructions configure said computer to
obtain a description of a dependent person comprising image data representing said dependent person and alphanumeric data;
reference said image data and said alphanumeric data in a database;
encode said description by means of processing said database with an encoder module; and
write said encoded description onto a removable data-carrying medium.

79. A computer-readable medium according to claim **78**, wherein said description further includes audio and video data and said instructions further configure said computer to reference said audio and video data in said database.

80. A computer-readable medium according to either of claims **78** or **79**, wherein said encoder module processes said database into a script.

81. A computer-readable medium according to claim **80**, wherein said script is an extended mark-up language (XML) script.

82. A computer-readable medium according to any of claims **78** to **81**, wherein said instructions further configure said computer to write an instruction set to said removable data-carrying medium.

83. A computer-readable medium according to any of claims **78** to **83**, wherein said instructions further configure said computer to write at least one HTML template to said removable data-carrying medium.

84. A computer system programmed to encode data and write said encoded data onto a removable data-carrying medium, said computer system comprising memory means, image data input means, alphanumeric data input means, processing means and data-writing means; wherein said memory means stores instructions which program said processing means to perform the steps of
receiving data comprising a description of a dependent person from said image data input means and from said alphanumeric data input means, wherein said description comprises image data representing said dependent person and alphanumeric data;
referencing said image data and alphanumeric data in a database;
encoding said description by means of processing said database with an encoder module; and
writing, via said data-writing means, said encoded description onto said removable data-carrying medium.

85. A computer system programmed according to claim **84**, wherein said data further comprises a description of a caretaker of said dependent person and said further description is also encoded and written to said medium.

86. A computer system programmed according to claim **85**, wherein said data further comprises descriptions of at least one further person dependent on said caretaker and said further descriptions are also encoded and written to said medium.

87. A computer system programmed according to either of claims **84** or **85** further comprising audio data input means and video data input means, wherein said description of said dependent person further includes audio and video data received from said audio and video data input means.

88. A computer system according to any of claims **84** to **87**, wherein said encoder module processes said database into a script.
